# EUROPEAN PATENT APPLICATION

(11) **EP 3 800 556 A1**
(43) Date of publication of application: **07.04.2021**
(21) Application number: 20191402.5
(22) Date of filing: 17.08.2020
(51) Int. Cl.: G06F 12/0831

(54) **SELECTIVE OVERRIDE OF CACHE COHERENCE IN MULTI-PROCESSOR COMPUTER SYSTEMS**

(30) Priority: 01.10.2019 US 201916589698
(71) Applicant: Nokia Solutions and Networks Oy, 02610 Espoo (FI)
(72) Inventor: Dutta, Pranjal, Sunnyvale, CA 94086 (US)
(74) Representative: Bryers LLP

(57) **Abstract**

Various example embodiments are related to cache coherence in multiprocessor computer systems. Various example embodiments are configured to support efficient cache coherence in multiprocessor computer systems. Various example embodiments are configured to support efficient cache coherence in multiprocessor computer systems based on support for selective override of cache coherence by processors in multiprocessor computer systems. Various example embodiments for supporting selective override of cache coherence in multiprocessor computer systems are configured to support selective override of cache coherence in processors of a multiprocessor computer system based on programmable approaches in the processors for selective overriding of cache coherence and based on use by the processors of snooping-based cache coherence protocols with capabilities for supporting selective overriding of cache coherence.

## Description

### TECHNICAL FIELD

Various example embodiments relate generally to multiprocessor computer systems and, more particularly but not exclusively, to cache coherence in multiprocessor computer systems.

### BACKGROUND

Multiprocessor computer systems utilize interconnection of multiple individual processors, on one or more chips, to support parallel processing and, thus, achieve high-performance computing.

### SUMMARY

In at least some example embodiments, an apparatus includes a processor including a processor cache, wherein the processor is configured to support selective overriding of cache coherence, for a data element operated on by the processor, based on a determination by the processor that the data element is to be exempted from cache coherence. In at least some example embodiments, the processor is configured such that, based on the determination by the processor that the data element is to be exempted from cache coherence, the processor will not trigger a cache coherence transaction on the data element in response to a memory operation on the data element. In at least some example embodiments, the processor is configured such that, based on the determination by the processor that the data element is to be exempted from cache coherence, the processor will not trigger a cache coherence transaction on the data element. In at least some example embodiments, the determination by the processor that the data element is to be exempted from cache coherence is based on a data type of the data element. In at least some example embodiments, the data type of the data element is processor local data (PLD). In at least some example embodiments, the data type of the data element is set by a program configured to be executed by the processor. In at least some example embodiments, the determination by the processor that the data element is to be exempted from cache coherence is based on memory region configuration information indicative that a memory region with which a memory operation for the data element is associated is configured to store a type of data to be exempted from cache coherence. In at least some example embodiments, the memory region configuration information is maintained in a control register of the processor. In at least some example embodiments, the control register is a range register configured to provide control over a manner in which a memory range of the processor cache is cached in the processor cache. In at least some example embodiments, the range register is a Memory Type Range Register (MTRR) or an Address Range Register (ARR). In at least some example embodiments, the range register is configured to support an access mode in which data in a specific memory range is made exempt from cache coherence. In at least some example embodiments, the control register is a page attribute table configured to provide control over a manner in which a page of the processor cache is cached in the processor cache. In at least some example embodiments, the page attribute table is configured to support an access mode in which data in a specific page is made exempt from cache coherence. In at least some example embodiments, the determination by the processor that the data element is to be exempted from cache coherence is based on a processor instruction indicative of a memory operation for the data element. In at least some example embodiments, the determination by the processor that the data element is to be exempted from cache coherence is based on a determination that a processor instruction including a memory operation for the data element is indicative that the memory operation is for a type of data to be exempted from cache coherence. In at least some example embodiments, the processor instruction is configured to indicate that a memory operand of the processor instruction includes a type of data to be exempted from cache coherence. In at least some example embodiments, configuration of the processor instruction to indicate that the memory operand of the processor instruction includes the type of data to be exempted from cache coherence is based on an instruction name of the processor instruction. In at least some example embodiments, the processor is an x86 processor and configuration of the processor instruction to indicate that the memory operand of the processor instruction includes the type of data to be exempted from cache coherence is based on a prefix in an Instruction Prefixes field. In at least some example embodiments, the processor instruction comprises an instruction supported by an Instruction Set Architecture (ISA) of the processor. In at least some example embodiments, the processor is configured to support a snooping protocol configured to support cache coherence in a memory hierarchy of a multiprocessor computing system. In at least some example embodiments, the snooping protocol is configured to support a private-clean state configured to indicate that a memory region of the processor cache for the data element is consistent with copies of the memory region stored in the memory hierarchy of the multiprocessor computing system and is exclusive to the processor. In at least some example embodiments, the snooping protocol is configured to support a private-dirty state configured to indicate that a memory region of the processor cache for the data element is modified without being updated to the memory hierarchy of the multiprocessor computing system and is exclusive to the processor.

In at least some example embodiments, a non-transitory computer-readable medium includes instructions for causing a processor including a processor cache to at least support selective overriding of cache coherence, for a data element operated on by the processor, based on a determination by the processor that the data element is to be exempted from cache coherence. In at least some example embodiments, the non-transitory computer-readable medium includes instructions for causing the processor to be configured such that, based on the determination by the processor that the data element is to be exempted from cache coherence, the processor will not trigger a cache coherence transaction on the data element in response to a memory operation on the data element. In at least some example embodiments, the non-transitory computer-readable medium includes instructions for causing the processor to be configured such that, based on the determination by the processor that the data element is to be exempted from cache coherence, the processor will not trigger a cache coherence transaction on the data element. In at least some example embodiments, the determination by the processor that the data element is to be exempted from cache coherence is based on a data type of the data element. In at least some example embodiments, the data type of the data element is processor local data (PLD). In at least some example embodiments, the data type of the data element is set by a program configured to be executed by the processor. In at least some example embodiments, the determination by the processor that the data element is to be exempted from cache coherence is based on memory region configuration information indicative that a memory region with which a memory operation for the data element is associated is configured to store a type of data to be exempted from cache coherence. In at least some example embodiments, the memory region configuration information is maintained in a control register of the processor. In at least some example embodiments, the control register is a range register configured to provide control over a manner in which a memory range of the processor cache is cached in the processor cache. In at least some example embodiments, the range register is a Memory Type Range Register (MTRR) or an Address Range Register (ARR). In at least some example embodiments, the range register is configured to support an access mode in which data in a specific memory range is made exempt from cache coherence. In at least some example embodiments, the control register is a page attribute table configured to provide control over a manner in which a page of the processor cache is cached in the processor cache. In at least some example embodiments, the page attribute table is configured to support an access mode in which data in a specific page is made exempt from cache coherence. In at least some example embodiments, the determination by the processor that the data element is to be exempted from cache coherence is based on a processor instruction indicative of a memory operation for the data element. In at least some example embodiments, the determination by the processor that the data element is to be exempted from cache coherence is based on a determination that a processor instruction including a memory operation for the data element is indicative that the memory operation is for a type of data to be exempted from cache coherence. In at least some example embodiments, the processor instruction is configured to indicate that a memory operand of the processor instruction includes a type of data to be exempted from cache coherence. In at least some example embodiments, configuration of the processor instruction to indicate that the memory operand of the processor instruction includes the type of data to be exempted from cache coherence is based on an instruction name of the processor instruction. In at least some example embodiments, the processor is an x86 processor and configuration of the processor instruction to indicate that the memory operand of the processor instruction includes the type of data to be exempted from cache coherence is based on a prefix in an Instruction Prefixes field. In at least some example embodiments, the processor instruction comprises an instruction supported by an Instruction Set Architecture (ISA) of the processor. In at least some example embodiments, the non-transitory computer-readable medium includes instructions for causing the processor to support a snooping protocol configured to support cache coherence in a memory hierarchy of a multiprocessor computing system. In at least some example embodiments, the snooping protocol is configured to support a private-clean state configured to indicate that a memory region of the processor cache for the data element is consistent with copies of the memory region stored in the memory hierarchy of the multiprocessor computing system and is exclusive to the processor. In at least some example embodiments, the snooping protocol is configured to support a private-dirty state configured to indicate that a memory region of the processor cache for the data element is modified without being updated to the memory hierarchy of the multiprocessor computing system and is exclusive to the processor.

In at least some example embodiments, a method includes supporting, by a processor including a processor cache, selective overriding of cache coherence, for a data element operated on by the processor, based on a determination by the processor that the data element is to be exempted from cache coherence. In at least some example embodiments, the processor is configured such that, based on the determination by the processor that the data element is to be exempted from cache coherence, the processor will not trigger a cache coherence transaction on the data element in response to a memory operation on the data element. In at least some example embodiments, the processor is configured such that, based on the determination by the processor that the data element is to be exempted from cache coherence, the processor will not trigger a cache coherence transaction on the data element. In at least some example embodiments, the determination by the processor that the data element is to be exempted from cache coherence is based on a data type of the data element. In at least some example embodiments, the data type of the data element is processor local data (PLD). In at least some example embodiments, the data type of the data element is set by a program configured to be executed by the processor. In at least some example embodiments, the determination by the processor that the data element is to be exempted from cache coherence is based on memory region configuration information indicative that a memory region with which a memory operation for the data element is associated is configured to store a type of data to be exempted from cache coherence. In at least some example embodiments, the memory region configuration information is maintained in a control register of the processor. In at least some example embodiments, the control register is a range register configured to provide control over a manner in which a memory range of the processor cache is cached in the processor cache. In at least some example embodiments, the range register is a Memory Type Range Register (MTRR) or an Address Range Register (ARR). In at least some example embodiments, the range register is configured to support an access mode in which data in a specific memory range is made exempt from cache coherence. In at least some example embodiments, the control register is a page attribute table configured to provide control over a manner in which a page of the processor cache is cached in the processor cache. In at least some example embodiments, the page attribute table is configured to support an access mode in which data in a specific page is made exempt from cache coherence. In at least some example embodiments, the determination by the processor that the data element is to be exempted from cache coherence is based on a processor instruction indicative of a memory operation for the data element. In at least some example embodiments, the determination by the processor that the data element is to be exempted from cache coherence is based on a determination that a processor instruction including a memory operation for the data element is indicative that the memory operation is for a type of data to be exempted from cache coherence. In at least some example embodiments, the processor instruction is configured to indicate that a memory operand of the processor instruction includes a type of data to be exempted from cache coherence. In at least some example embodiments, configuration of the processor instruction to indicate that the memory operand of the processor instruction includes the type of data to be exempted from cache coherence is based on an instruction name of the processor instruction. In at least some example embodiments, the processor is an x86 processor and configuration of the processor instruction to indicate that the memory operand of the processor instruction includes the type of data to be exempted from cache coherence is based on a prefix in an Instruction Prefixes field. In at least some example embodiments, the processor instruction comprises an instruction supported by an Instruction Set Architecture (ISA) of the processor. In at least some example embodiments, the processor is configured to support a snooping protocol configured to support cache coherence in a memory hierarchy of a multiprocessor computing system. In at least some example embodiments, the snooping protocol is configured to support a private-clean state configured to indicate that a memory region of the processor cache for the data element is consistent with copies of the memory region stored in the memory hierarchy of the multiprocessor computing system and is exclusive to the processor. In at least some example embodiments, the snooping protocol is configured to support a private-dirty state configured to indicate that a memory region of the processor cache for the data element is modified without being updated to the memory hierarchy of the multiprocessor computing system and is exclusive to the processor.

In at least some example embodiments, an apparatus includes means for supporting, by a processor including a processor cache, selective overriding of cache coherence, for a data element operated on by the processor, based on a determination by the processor that the data element is to be exempted from cache coherence. In at least some example embodiments, the processor is configured such that, based on the determination by the processor that the data element is to be exempted from cache coherence, the processor will not trigger a cache coherence transaction on the data element in response to a memory operation on the data element. In at least some example embodiments, the processor is configured such that, based on the determination by the processor that the data element is to be exempted from cache coherence, the processor will not trigger a cache coherence transaction on the data element. In at least some example embodiments, the determination by the processor that the data element is to be exempted from cache coherence is based on a data type of the data element. In at least some example embodiments, the data type of the data element is processor local data (PLD). In at least some example embodiments, the data type of the data element is set by a program configured to be executed by the processor. In at least some example embodiments, the determination by the processor that the data element is to be exempted from cache coherence is based on memory region configuration information indicative that a memory region with which a memory operation for the data element is associated is configured to store a type of data to be exempted from cache coherence. In at least some example embodiments, the memory region configuration information is maintained in a control register of the processor. In at least some example embodiments, the control register is a range register configured to provide control over a manner in which a memory range of the processor cache is cached in the processor cache. In at least some example embodiments, the range register is a Memory Type Range Register (MTRR) or an Address Range Register (ARR). In at least some example embodiments, the range register is configured to support an access mode in which data in a specific memory range is made exempt from cache coherence. In at least some example embodiments, the control register is a page attribute table configured to provide control over a manner in which a page of the processor cache is cached in the processor cache. In at least some example embodiments, the page attribute table is configured to support an access mode in which data in a specific page is made exempt from cache coherence. In at least some example embodiments, the determination by the processor that the data element is to be exempted from cache coherence is based on a processor instruction indicative of a memory operation for the data element. In at least some example embodiments, the determination by the processor that the data element is to be exempted from cache coherence is based on a determination that a processor instruction including a memory operation for the data element is indicative that the memory operation is for a type of data to be exempted from cache coherence. In at least some example embodiments, the processor instruction is configured to indicate that a memory operand of the processor instruction includes a type of data to be exempted from cache coherence. In at least some example embodiments, configuration of the processor instruction to indicate that the memory operand of the processor instruction includes the type of data to be exempted from cache coherence is based on an instruction name of the processor instruction. In at least some example embodiments, the processor is an x86 processor and configuration of the processor instruction to indicate that the memory operand of the processor instruction includes the type of data to be exempted from cache coherence is based on a prefix in an Instruction Prefixes field. In at least some example embodiments, the processor instruction comprises an instruction supported by an Instruction Set Architecture (ISA) of the processor. In at least some example embodiments, the processor is configured to support a snooping protocol configured to support cache coherence in a memory hierarchy of a multiprocessor computing system. In at least some example embodiments, the snooping protocol is configured to support a private-clean state configured to indicate that a memory region of the processor cache for the data element is consistent with copies of the memory region stored in the memory hierarchy of the multiprocessor computing system and is exclusive to the processor. In at least some example embodiments, the snooping protocol is configured to support a private-dirty state configured to indicate that a memory region of the processor cache for the data element is modified without being updated to the memory hierarchy of the multiprocessor computing system and is exclusive to the processor.

### BRIEF DESCRIPTION OF THE DRAWINGS

The teachings herein can be readily understood by considering the following detailed description in conjunction with the accompanying drawings, in which:
FIG. 1 depicts an example embodiment of a multiprocessor computer system configured to support selective override of cache coherence;
FIGs. 2A - 2B depict a generic model using two processors to describe use of cache coherence in a multiprocessor computer system;
FIG. 3 depicts an example of use of a snooping approach for cache coherence in a multiprocessor computer system;
FIG. 4 depicts an example of a high-level architecture of a forwarding plane in an NFV based router;
FIG. 5 depicts an example embodiment of a snooping protocol configured to support selective override of cache coherence;
FIG. 6 depicts an example embodiment of a method by which a processor configures a PLD memory region in the processor;
FIG. 7 depicts an example embodiment of a method by which a processor reads from a memory address of a local cache of the processor where the processor supports PLD memory regions;
FIG. 8 depicts an example embodiment of a method by which a processor writes to a memory address of a local cache of the processor where the processor supports PLD memory regions;
FIG. 9 depicts an example embodiment of a memory layout of a program, illustrating program memory segments and the mapping of the program memory segments to physical addresses;
FIG. 10 depicts an example embodiment of an implementation of memory state of a program in an OS kernel and a processor;
FIG. 11 depicts an example embodiment of a method by which a processor uses a PLD instruction to read a memory operand from a local cache of the processor;
FIG. 12 depicts an example embodiment of a method by which a processor uses a PLD instruction to write a memory operand to a local cache of the processor;
FIG. 13 depicts an example encoding of an x86 instruction in an x86 Instruction Set Architecture for illustrating support for overriding of cache coherence;
FIG. 14 depicts an example embodiment of a method for supporting selective override of cache coherence; and
FIG. 15 depicts an example embodiment of a computer suitable for use in performing various functions presented herein.

To facilitate understanding, identical reference numerals have been used, where possible, to designate identical elements that are common to the figures.

### DETAILED DESCRIPTION

Various example embodiments are related to cache coherence in multiprocessor computer systems (which also may be referred to herein as multiprocessor systems). Various example embodiments are configured to support efficient cache coherence in multiprocessor computer systems. Various example embodiments are configured to support efficient cache coherence in multiprocessor computer systems based on support for selective override of cache coherence by processors in multiprocessor computer systems. Various example embodiments for supporting selective override of cache coherence in multiprocessor computer systems are configured to support selective override of cache coherence in processors of a multiprocessor computer system based on programmable approaches in the processors for selective overriding of cache coherence and based on use by the processors of snooping-based cache coherence protocols with capabilities for supporting selective overriding of cache coherence. Various example embodiments for supporting selective override of cache coherence may be configured to provide a processor including a processor cache, wherein the processor is configured to support selective overriding of cache coherence, for a data element operated on by the processor, based on a determination by the processor that the data element is to be exempted from cache coherence. Various example embodiments for supporting selective override of cache coherence may be configured to provide a processor including a processor cache, wherein the processor is configured to support selective overriding of cache coherence, for a data element operated on by the processor, based on a determination by the processor that the data element is a type of data for which cache coherence is to be overridden (where the type of data for which cache coherence is to be overridden is referred to herein as processor local data (PLD), which is data that is local to the processor, and where the types of data considered to be PLD for a processor may vary across different processors and across different multiprocessor computer systems). Various example embodiments for supporting selective override of cache coherence may be configured to provide a processor including a processor cache, wherein the processor is configured to support selective overriding of cache coherence, for a data element operated on by the processor, based on a determination by the processor that the data element is a type of data for which cache coherence is to be overridden, where the data element is described as being of the type "PLD" by a program executing on the processor such that the processor, when operating on that data element, may make the determination that cache coherence is to be overridden for the data element. Various example embodiments for supporting selective override of cache coherence by a processor may be configured to support selective overriding of cache coherence for a data element where such selective overriding of cache coherence for the data element may include exemption of the data element from cache coherence on a memory operation by the processor for the data element (e.g., where the processor is configured such that, based on a determination that cache coherence is overridden for the data element, a memory operation on the data element will not trigger a cache coherence transaction; such as where the processor is configured to, based on the determination by the processor that the data element is to be exempted from cache coherence, prevent triggering of a cache coherence transaction on the data element in response to a memory operation on the data element) and exemption of the data element from cache coherence during handling of a cache coherence transaction on the data element (e.g., where the processor is configured such that, based on a determination that cache coherence is overridden for the data element, the processor will not respond to a cache coherence transaction on the data element; such as where the processor is configured to, based on the determination by the processor that the data element is to be exempted from cache coherence, prevent triggering of a response to a cache coherence transaction on the data element). Various example embodiments for supporting selective override of cache coherence may be configured to provide a processor including a processor cache, wherein the processor is configured to support selective overriding of cache coherence for a the processor cache based on a determination by the processor that the data element is to be exempted from cache coherence, where the determination by the processor that the data element is to be exempted from cache coherence may be based on memory region configuration information indicative that the memory region with which the data element is associated is configured to store a type of data to be exempted from cache coherence (e.g., memory region configuration information maintained in a control register of the processor, such as a range register, a page attribute table, or the like), may be based on a processor instruction indicative of the memory operation for the data element (e.g., based on a determination that a processor instruction including the memory operation for the data element is indicative that the memory operation is for a type of data to be exempted from cache coherence, such as based on an instruction name of the processor instruction), or the like, as well as various combinations thereof. It will be appreciated that various example embodiments for supporting efficient cache coherence in multiprocessor computer systems based on support for selective override of cache coherence by processors in multiprocessor computer systems may be used within various types of multiprocessor computer systems which may be based on various types of multiprocessor hardware architectures (e.g., shared memory multicore processor architectures, Cache Coherent - Non-Uniform Memory Access (cc-NUMA) architectures, heterogeneous multiprocessor computer system architectures, or the like, as well as various combinations thereof), may be configured to support various applications (e.g., generic computing applications, network function virtualization (NFV) applications such as those related to packet processing in NFV contexts, machine learning applications, or the like, as well as various combinations thereof), or the like, as well as various combinations thereof; however, for purposes of clarity in describing various aspects of supporting efficient cache coherence in multiprocessor computer systems based on support for selective override of cache coherence by processors in multiprocessor computer systems, the various example embodiments presented herein are primarily discussed within the context of multiprocessor computer systems utilizing a particular type of hardware architecture (namely, shared memory multicore processor architectures) and supporting a particular type of application (namely, NFV packet processing). It will be appreciated that these and various other example embodiments and advantages or potential advantages of supporting efficient cache coherence in multiprocessor computer system based on selective override of cache coherence by processors in multiprocessor computer systems may be further understood by way of reference to the following description and the associated figures discussed in conjunction with the following description.

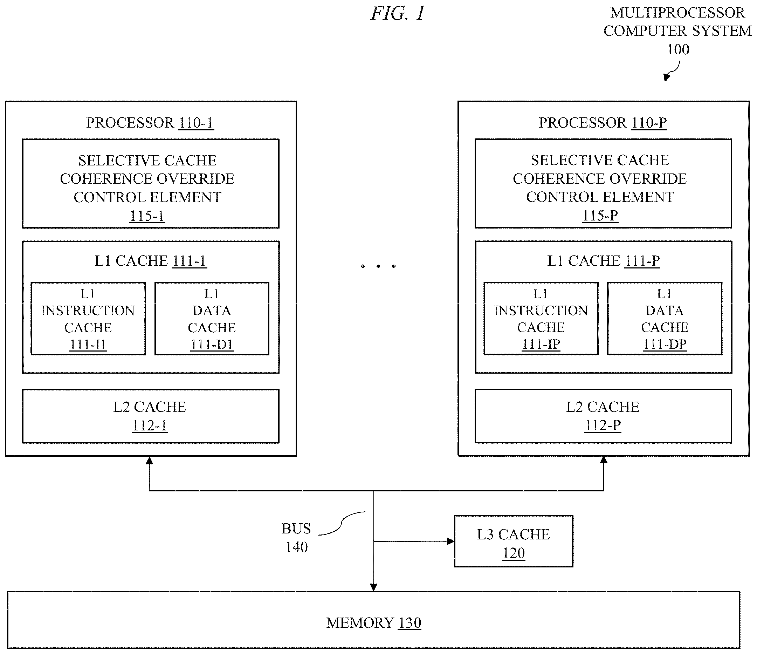

FIG. 1 depicts an example embodiment of a multiprocessor computer system configured to support selective override of cache coherence.

The multiprocessor computer system 100 is configured to support various types of processing based on use of various parallel processing techniques enabled by the multiple processors of the multiprocessor computer system 100. The multiprocessor computer system 100 may be based on various multiprocessor hardware architectures, may be configured to support various applications, or the like, as well as various combinations thereof.

The multiprocessor computer system 100 includes a set of processors 110-1 - 110-P (collectively, processors 110), an L3 cache 120, and a memory 130, which are communicatively connected via a bus 140. It will be appreciated that the processors 110 may be provided on a single chip (e.g., in a multi-core processors where each of the processors operates a core of the multi-core processor), may be distributed across two or more chips, or the like.

The processors 110 of the multiprocessor computer system 100 are configured to execute programs. More specifically, a processor 110 may read instructions of its assigned program from the memory 130 and execute the instructions and, further, may read operands of instructions (input data) from the memory 130 and write outputs of instructions (output data) back to the memory 130. It will be appreciated that, in most cases, writing back of output data to input-output (I/O) units (e.g., peripherals such as network interface cards (NICs), storage disks, and so forth) may be seen as writing to the memory 130 since most I/O units are mapped as regions in the memory 130 (which is the reason that the I/O units are omitted from FIG. 1 for purposes of clarity). It is noted that this architecture is also referred to as Symmetric MultiProcessors (SMP) since the various system resources (e.g., memory, disks, other I/O devices, and the like) are accessible by the processors 110 in a uniform manner.

The processors 110 of the multiprocessor computer system 100 are configured to utilize cache memories for improved operation. A cache memory, or cache, is a smaller, faster memory that is local to a processor in order to provide fast access to data and to reduce number of memory requests to the main memory (i.e., memory 130). A cache of a processor stores copies of memory locations used frequently by the processor, in order to reduce the average cost (time or energy) of accessing main memory. By default, anything read or written by a processor is stored in the cache, except certain memory regions that may be marked as un-cacheable. Caches store memory contents by blocks of contiguous memory locations, referred to as cache lines, where each cache line is indexed in the cache by the first memory address in the cache line. Caches benefit from the temporal and spatial locality of memory access patterns in a program executed by the processor, where spatial locality refers to use of relatively close memory locations (i.e., within a cache line) and temporal locality refers to the reuse of specific cache line within a relatively small time duration. Many multiprocessor computer systems, such as multiprocessor computer system 100 of FIG. 1, include at least three levels of caches which are generally referred to as the L1 cache, the L2 cache, and the L3 cache.

The processors 110-1 - 110-P each include L1 caches 111-1 to 111-P (collectively, L1 caches 111) and L2 caches 112-1 to 112-P (collectively, L2 caches 112), respectively, and the L3 cache 120 is common to each of the processors 110. The L1 cache 111 of a processor 110 is smallest and nearest to the processing functions of the processor 110 and, thus, faster than the other cache types. The L1 cache 111 of a processor 110 is typically split into two L1 caches as follows: an L1 Instruction Cache (e.g., 32KB size or other suitable size) which holds program instructions (illustratively, L1 caches 111-1 - 111-P include L1 instruction caches 111-I1 - 111-IP (collectively, L1 instruction caches 111 -I), respectively) and an L1 Data Cache (e.g., 32K size or other suitable size) which holds program data (illustratively, L1 caches 111-1 - 111-P include L1 data caches 111-D1 - 111-DP (collectively, L1 data caches 111-D), respectively). The L2 cache 112 (e.g., 256KB size or other suitable size) of a processor 110 may be a unified cache holding both instructions and program data. The L3 cache 120 (e.g., 2MB size or other suitable size), which is common to the processors 110 (and, thus, located outside of the processors 110) is a unified cache holding both instructions and program data. It will be appreciated that the size and access latency of caches grow according to the levels (e.g., typical latencies for L1 caches, L2 caches, and L3 caches in existing multiprocessor computer systems are 4, 12, and 44 cycles, respectively, and the latency to the memory 130 by the processors 110 is 62 cycles + 100 ns).

The processors 110 may utilize the caches as follows. When memory content is needed by a processor 110, the entire cache line containing the required content is eventually loaded into the L1 cache 111 of the processor 110. The memory address for the cache line is computed by masking the address value according to cache line size. For a 64B cache line, this means the low 6 bits are zeroed. The discarded bits are used as the offset into the cache line. If the cache line corresponding to a memory address sought is missing in the L1 cache 111 of the processor 110, then the processor 110 performs lookups in subsequent levels of caches (e.g., the L2 caches 112 and the L3 cache 120). The main memory (namely, memory 130) is accessed only if the memory address is missing in all caches. Eventually, the missing block is read into a cache line in the L1 cache 111 of the processor 110.

The processors 110 may utilize caches that are organized as N-way set associative arrays, i.e., the cache is organized into S number of sets wherein each set as N cache lines. A memory block is mapped into a set based on certain bits in the first/base address of the block. Then a cache line among the N ways is selected to store the memory block. If the number of cache lines to be stored in a set exceeds N, then it is required to evict an existing cache line in order to make room for a new memory block. The cache hierarchy may be exclusive or inclusive.

The cache hierarchy of the processors 110, as indicated above, may be exclusive. Here, exclusivity means that it is not guaranteed that a memory block exists in all caches in the hierarchy. If the cache hierarchy is exclusive, then an eviction from the L1 cache 111 of a processor 110 pushes the cache line down into the L2 cache 112 of the processor 110 (which uses the same cache line size) if the cache hierarchy is exclusive. The eviction from the L1 cache 111 of the processor 110 means room has to be made in the L2 cache 112 of the processor 110. This in turn might push the content into the L3 cache 120 and, ultimately, into memory 130. Each eviction is progressively more expensive. A possible advantage of an exclusive cache is that loading a new cache line only has to touch the L1 cache 111 of the processor 110 and not the L2 cache 112 of the processor, which could be faster.

The cache hierarchy of the processors 110, as indicated above, alternatively may be inclusive. If the cache hierarchy is inclusive, then each cache line in the L1 cache 111 of the processor 110 is also present in the L2 cache 112 of the processor and, thus, evicting from the L1 cache 111 is much faster since it does not require pushing the cache line in the L2 cache 112 (rather, the L1 cache 111 simply discards the evicted cache line). With enough L2 cache space, the disadvantage of wasting memory for content held in two places is minimal and it pays off when evicting.

With respect to exclusivity or inclusivity of cache hierarchies, it is further noted that the L3 cache 120 may be inclusive or non-inclusive. If the L3 cache 120 is inclusive, then the L3 cache 120 caches all cache lines that are present in the caches on board each of the processors 110. If the L3 cache 120 is non-inclusive, then the L3 cache 120 does not guarantee that it will include a cache line present in caches on board a processor 110.

The processors 110 may utilize caches that are implemented as write-back caches (which is a type of cache write policy), although it will be appreciated that the caches may be implemented in various other ways. When using a write-back policy, a processor 110 does not immediately write a modified cache line back to upper level caches (e.g., L2 cache 112 or L3 cache 120) and/or main memory (e.g., memory 130); instead, the cache line is only marked as dirty. When an instruction modifies data at a memory address, the processor 110 still has to load the corresponding cache line first, because no instruction modifies an entire cache line at once. As a result, the content of the cache line before the write operation has to be loaded. It is generally not possible for a cache to hold partial cache lines. A cache line which has been written to is not seen by its upper memory hierarchy (i.e., upper level caches and/or main memory). So, a cache line which has not been written back to memory hierarchy is said to be "dirty" (e.g., marked with a dirty flag) and, once it is written back, the dirty flag is cleared. When the cache line is dropped from the cache at some point in the future, the dirty bit will instruct the processor 110 to write the data back at that time instead of just discarding the content (in case of inclusive caches). It will be appreciated that write-back caches have the chance to be significantly better performing, which is why most memory in a system with a decent processor is cached this way. It will be appreciated that, although primarily presented herein within the context of embodiments in which the processors 110 utilize write-back caches, the processors 110 may utilize various other types of caches.

The multiprocessor computer system 100 is configured to support various example embodiments of selective override of cache coherence as discussed herein. The processors 110-1 - 110-P each include selective cache coherence override control elements 115-1 - 115-P (collectively, selective cache coherence override control elements 115), respectively. The selective cache coherence override control elements 115 each are configured to enable the processors 110 to support selective override of cache coherence as discussed herein.

In at least some embodiments, a selective cache coherence override control element 115 of a processor 110 may be configured to enable the processor 110 to support selective overriding of cache coherence for a data element operated on by the processor 110 (e.g., the L1 cache 111 and L2 cache 112 of the processor 110) based on a determination by the processor 110 that the data element is to be exempted from cache coherence (e.g., based on a determination that the data element is a type of data to be exempted from cache coherence (e.g., PLD), based on a determination that the data element is associated with a memory operation on a memory region configured to store a type of data to be exempted from cache coherence, and so forth).

In at least some embodiments, a selective cache coherence override control element 115 of a processor 110 may be configured to enable the processor 110 to support selective overriding of cache coherence for a data element operated on by the processor 110 (e.g., the L1 cache 111 and L2 cache 112 of the processor 110) where such selective overriding of cache coherence for the data element may include exemption of the data element from cache coherence on a memory operation by the processor 110 for the data element (e.g., where the processor 110 is configured such that, based on a determination that cache coherence is overridden for the data element, a memory operation on the data element will not trigger a cache coherence transaction; such as where the processor 110 is configured to, based on the determination by the processor 110 that the data element is to be exempted from cache coherence, prevent triggering of a cache coherence transaction on the data element in response to a memory operation on the data element).

In at least some embodiments, a selective cache coherence override control element 115 of a processor 110 may be configured to enable the processor 110 to support selective overriding of cache coherence for a data element operated on by the processor 110 (e.g., the L1 cache 111 and L2 cache 112 of the processor 110) where such selective overriding of cache coherence for the data element may include exemption of the data element from cache coherence during handling by the processor 110 of a cache coherence transaction on the data element (e.g., where the processor 110 is configured such that, based on a determination that cache coherence is overridden for the data element, the processor 110 will not respond to a cache coherence transaction on the data element; such as where the processor 110 is configured to, based on the determination by the processor 110 that the data element is to be exempted from cache coherence, prevent triggering of a response to a cache coherence transaction on the data element).

In at least some embodiments, a selective cache coherence override control element 115 of a processor 110 may be configured to enable the processor 110 to support selective overriding of cache coherence for a data element operated on by the processor 110 (e.g., the L1 cache 111 and L2 cache 112 of the processor 110) based on a determination by the processor 110 that the data element is to be exempted from cache coherence, where the determination by the processor 110 that the data element is to be exempted from cache coherence may be based on memory region configuration information indicative that a memory region with which a memory operation for the data element is associated is configured to store a type of data to be exempted from cache coherence (e.g., memory region configuration information maintained in a control register of the processor 110, such as a range register, a page attribute table, or the like), may be based on a processor instruction indicative of the memory operation for the data element (e.g., based on a determination that a processor instruction including the memory operation for the data element is indicative that the memory operation is for a type of data to be exempted from cache coherence, such as based on an instruction name of the processor instruction), or the like, as well as various combinations thereof.

It will be appreciated that the selective cache coherence override control elements 115 of the processors 110 may be configured to provide various other functions for enabling the processors 110 to support selective overriding of cache coherence.

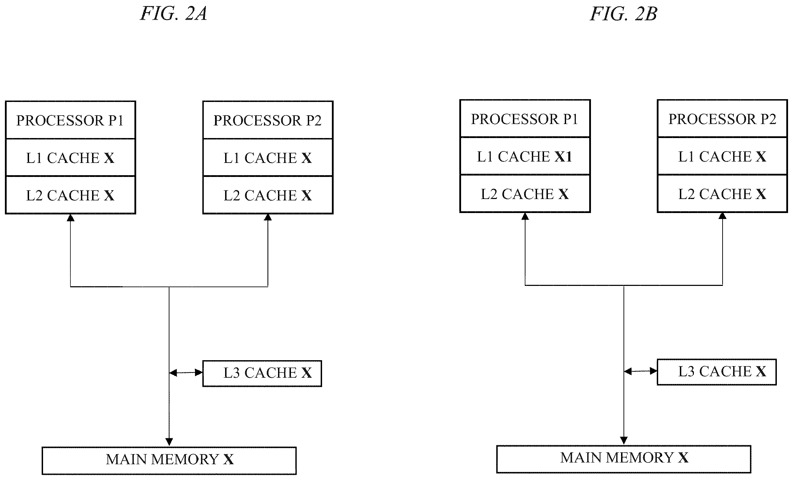

It will be appreciated that various embodiments for supporting selective override of cache coherence may be further understood by further considering cache coherence more generally, as discussed with respect to FIGs. 2A - 2B.

FIGs. 2A - 2B depict a generic model using two processors to describe use of cache coherence in a multiprocessor computer system.

In general, managing caches in a multiprocessor computer system is relatively complex. Multiple private caches (e.g., L1 and L2 caches in the processors P1 and P2) introduce the multi-cache coherence problem (or stale data problem) due to multiple copies of main memory data that can concurrently exist in the multiprocessor computer system. When more than one processor is accessing the same memory, it must still be assured that both processors see the same memory content at all times. If a cache line is dirty on one processor (i.e., it has not been written back yet), and a second processor tries to read the same memory location, the read operation cannot just go out to the main memory or the shared cache (e.g., the common L3 cache); instead, the content of the cache line of the first processor is needed.

In FIGs. 2A - 2B, let X be an element of shared data which has been referenced by two processors, P1 and P2, in the multiprocessor computer system. In the beginning (depicted in FIG. 2A), copies of X are consistent across the local L1 and L2 caches in P1 and P2, the shared L3 cache, and main memory. If the processor P1 writes a new data X1 into the data element in its L1 cache, by using write-back policy, the same copy will not be written immediately into the local L2 cache, the shared L3 cache, or the main memory. In this case, inconsistency occurs between the L1 cache of P1 and the rest of the copies. When a write-back policy is used, the L2 cache is updated when the modified data in the L1 cache is replaced or invalidated. When the L2 cache evicts modified data then it is written to the L3 cache. When the L3 cache evicts modified data then it is written to the main memory.

In FIGs. 2A - 2B, consistency between the local L1 and L2 caches in P1 is not a problem since P1 will always access the modified data from the local L1 cache. The issue is between the private caches (L1 and L2) of the processors P1 and P2. The private caches of the processors P1 and P2 cannot work independently from each other. Since each processor has its own private caches, care must be taken to make sure that each processor receives consistent data of a memory address from its private caches, regardless of how other processors may be affecting the data at that memory address. Essentially, the processors are supposed to see consistent memory content at all times. The maintenance of this uniform view of memory is called cache coherence which, more formally, defines the behavior of reads and writes to a single address location. When the following two conditions are met, a cache correctly handles the memory accesses across the multiple processors and is considered to be cache coherent:
Condition 1: A value written by a processor is eventually visible by other processors. In a read made by a processor P1 to a location M that follows a write by the same processor P1 to M, with no writes to M by another processor occurring between the write and the read instructions made by processor P1, M must always return the value written by processor P1.
Condition 2: In a read made by a processor P1 to location M that follows a write by another processor P2 to M, with no other writes to M made by any processor occurring between the two accesses and with the read and write being sufficiently separated, M must always return the value written by processor P2. This condition defines the concept of a coherent view of memory. Propagating the writes to the shared memory location ensures that all the caches have a coherent view of the memory. If processor P1 reads the old value of M, even after the write by P2, then the memory may be considered to be incoherent.
   The above conditions satisfy the "write propagation criteria" that is required for cache coherence; however, these conditions are not sufficient as they do not satisfy the "transaction serialization" condition. This may be further understood from the following example. Consider a multiprocessor computer system that includes four processors - P1, P2, P3 and P4 - each of which includes cached copies of a shared variable S whose initial value is 0. Processor P1 changes the value of S (in its cached copy) to 10 and then processor P2 changes the value of S in its own cached copy to 20. If we ensure only write propagation, then processors P3 and P4 will certainly see the changes made to S by processors P1 and P2. However, processor P3 may see the change made by processor P1 after seeing the change made by processor P2 and hence return 10 on a read to S. Processor P4, on the other hand, may see changes made by processors P1 and P2 in the order in which they are made and, thus, return 20 on a read to S. The processors P3 and P4 now have an incoherent view of the memory. As such, in order to satisfy "transaction serialization" and, thus, achieve cache coherence, the following condition also, in addition to the two conditions described above, must be met:
Condition 3: Writes to the same location must be sequenced. In other words, if location M received two different values A and B, in this order, from any two processors, the processors can never read location M as B and then read it as A. The location M must be seen with values A and B in that order.

If the three conditions described above can be maintained in a multiprocessor computer system, the processors in the multiprocessor computer system can use their caches efficiently. If a processor were to look simply at its private caches and main memory, it would not see the content of dirty cache lines in other processors. Providing direct access to the caches of one processor from another processor would be terribly expensive and a huge bottleneck so, instead, many implementations of cache coherence utilize the principle of "write-invalidate" to meet the three conditions above. In the write-invalidate approach, processors detect when another processor wants to read or write to a certain cache line. Each of the processors monitors the write accesses of other processors and compares the addresses of the write accesses with those in their private cache lines. If a write access is detected and the processor has a clean copy of the cache line in its cache, this cache line is marked invalid. Future references will require the cache line to be reloaded; if another processor has the cache line in dirty state, then the cache line need to be transferred from that processor, otherwise the cache line needs to be loaded from L3 cache or main memory. It is noted that read accesses on another processors do not necessitate an invalidation of cache lines by the processors.

In general, the outcome of cache coherence can be summarized by the following rules: (1) a dirty cache line is not present in cache of any other processor other than the processor that modified the cache line and (2) clean copies of the same cache line can reside in arbitrarily many caches.

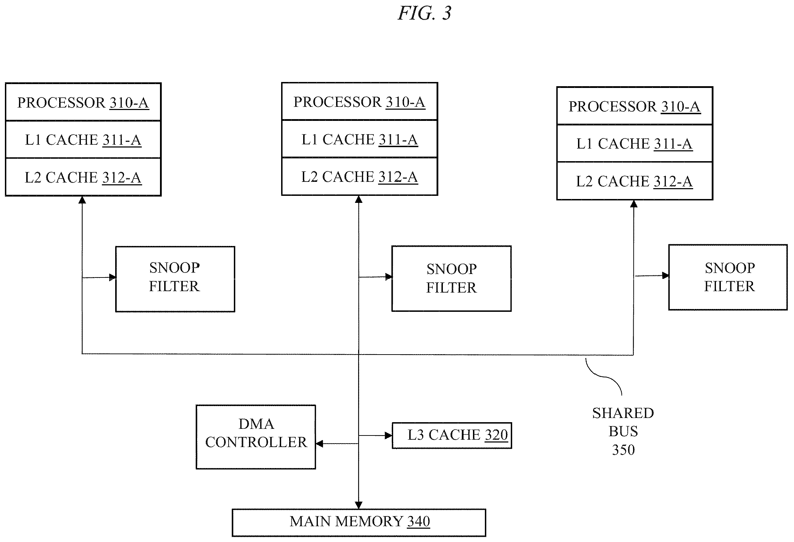

In order to maintain cache coherence based on a write invalidate approach, various snooping based cache coherence protocols have been developed. In a snooping-based approach, the caches (e.g., L1, L2, and L3 caches in FIGs. 1 and 2A-2B) are interconnected over a shared bus, a cache notifies on the bus a read or write access to a cache line by its host processor, and all other caches snoop (monitor) the bus to determine whether they have a copy of the cache line requested for read or write. Each cache keeps the sharing status of a cache line locally, which is updated based on snooping activity on the cache line. To perform a write on a data element, a processor ensures that it has exclusive access to the corresponding cache line before it writes the data into that cache line. The private cache on the processor acquires the shared bus and broadcasts the address of the cache line to be invalidated (i.e., write access) on the bus. All other caches snoop on the bus and check to see if the cache line is in their cache. If so, the cache line is invalidated. Thus, use of a shared bus enforces write serialization. On each write by a processor to its private cache, all copies of the cache line in all other caches are invalidated. If two or more processors attempt to write into the same cache line simultaneously, only one of them wins the race, causing the copies of the cache line maintained on the other processors to be invalidated. The use of snooping to support cache coherence may be further understood with respect to the multiprocessor computer system of FIG. 3.

FIG. 3 depicts an example of use of a snooping approach for cache coherence in a multiprocessor computer system. The multiprocessor computer system 300 includes a set of processors 310-A to 310-C (collectively, processors 310) which are interconnected to an L3 cache 320 and a main memory 340 via a shared bus 350. The processors 310-A - 310-C each include private caches including L1 cache 311-A - 311-C and L2 caches 312-A to 312-C, respectively, which are N-way set associative. In the multiprocessor computer system 300, each write request from a processor 310 to its L1 cache 311 is notified/broadcasted on the shared bus 350 about the memory address being written to based on the write request. The L1 caches 311 and the L2 caches 312 in the processors 310 and the L3 cache 320 snoop on the shared bus 350 for such broadcasts based on a snooping protocol, check if the memory address being written to is also located locally in that respective cache doing the snooping, and, if the memory address being written to is also located locally in that respective cache then the cache line corresponding to that memory address is invalidated. It will be appreciated that many different snooping protocols, which also may be referred to as write-invalidate based cache coherence protocols, are available for use in supporting cache coherence in multiprocessor computer systems, some of which are discussed further below.

A widely used write-invalidate based cache coherence protocol to support write-back caches is the MESI protocol. MESI is named after the four states a cache line can be in while using the MESI protocol (namely, Modified, Exclusive, Shared, Invalid). In the Modified (M) state, the local processor has modified the cache line (which also implies that it is the only copy in any cache). In the Exclusive (E) state, the cache line is not modified, but is known to not be loaded into any other processor cache. In the Shared (S) state, the cache line is not modified and might exist in another processor cache. In the Invalid (I) state, the cache line is invalid, i.e., unused. This protocol has developed over the years from simpler versions (e.g., MSI) which were less complicated, but also less efficient. With these four states it is possible to efficiently implement write-back caches while also supporting concurrent use of read-only data on different processors.

In MESI, the states of the cache lines of a processor may be controlled as follows. Initially, all cache lines in a processor (i.e., its private caches) are empty and, thus, also Invalid. If data is loaded by the processor for writing, then the processor changes the state of the corresponding cache line to Modified. If the data is loaded by the processor for reading, the new state depends on whether another processor has the cache line loaded as well. If the cache line exists in another processor then the new state is Shared, otherwise the new state is Exclusive.

In MESI, if a Modified cache line is read from or written to on the local processor, the instruction can use the current cache content and the state does not change. If a second processor wants to read from the cache line, then it broadcasts a read request on the shared bus. As a result, the first processor has to send the content of its cache to the second processor and then both can change the state to Shared. The data sent to the second processor is also received and processed by the L3 cache and memory controller, which update the content in their respective storages. If this did not happen, the cache line could not be marked as Shared (because the Shared state means that identical copies are stored everywhere). If the second processor wants to write to the cache line, then it broadcasts a "Read For Ownership" (RFO) on the shared bus. An RFO is an operation that combines a read and an invalidate broadcast. As a result, the first processor sends the cache line content and also marks the cache line locally as Invalid. Formally, an RFO operation is issued by a processor trying to write into a cache line that is in invalid (I) state of the MESI protocol. The operation causes all other cache to set the state of such a line to I. An RFO transaction is a read operation with intent to write to that cache line. Therefore, this operation is exclusive. It brings data to the cache and invalidates all other processor caches which hold this cache line.

In MESI, if a cache line is in the Shared state and the local processor reads from it, no state change is necessary and the read request can be fulfilled from the cache. If the cache line is locally written to the cache line in the Shared state, then the state changes to Modified. It also requires that all other possible copies of the cache line in other processors are marked as Invalid. Therefore, the write operation has to be announced to the other processors by broadcasting an Invalidate message in the shared bus. If the cache line is requested for reading by a second processor then nothing has to happen in the local processor. The main memory contains the current data and the local state is already Shared. In case a second processor wants to write to the cache line, then the second processor issues an Invalidate broadcast. On receipt of Invalidate request, the cache line is simply marked Invalid by local processor.

In MESI, the Exclusive state is mostly identical to the Shared state with one difference: a local write operation does not have to be announced on the shared bus via Invalidate message. The local cache copy is known to be the only one. This can be a huge advantage, so the processor will try to keep as many cache lines as possible in the Exclusive state instead of the Shared state. The latter is the fallback in case the information is not available at that moment. The Exclusive state can also be left out completely without causing functional problems. It is only the performance that will suffer since the E→M transition is much faster than the S→M transition.

In MESI, when a first processor has written to a cache line (which is in Modified state in the private cache of first processor) and then a second processor reads that cache line (which is Invalid state in the private cache of second processor), it requires the first processor to flush the Modified copy to the L3 cache and main memory, while sending the cache line to second processor. Otherwise, the state of the cache line cannot be moved into Shared state in both processors. This can be a problem if the first processor is continuously writing to the cache line and second processor is continuously reading the cache line, which requires flushing the cache line continually to L3 cache and main memory. However, this is not a requirement; rather, it is just an additional overhead. This challenge is overcome by MOESI. In MOESI, in addition to the four common MESI protocol states, there is a fifth "Owned" state representing a cache line that is both modified and shared. This avoids the need of the first processor to flush the Modified cache line to L3 cache and main memory before sharing it with second processor. While the cache line must still be written back eventually, the write back may be deferred by the first processor till the cache line is evicted from its private caches. It will be appreciated that MOESI is employed in AMD processors.

In MESI, a cache line request that is received by multiple caches holding a line in the S state will be serviced inefficiently. All sharing caches could respond, bombarding the requestor with redundant responses on the shared bus, which impacts the efficiency of cache coherence. This problem is solved by the MESIF protocol. In addition to the four common states of MESI, there is a fifth "Forward (F)" state. The F state is a specialized form of the S state and indicates that a cache should act as designated responder for any requests for the given cache line. This allows the requestor to receive a copy at cache-to-cache speeds. The protocol ensures that, if any cache holds a line in S state, at most one (other) cache holds it in the F state. Since a cache may unilaterally discard (invalidate) a line in S or F states, it would have been possible that no cache has a copy in F state, even though copies in S exist. So, to minimize the chance of the F line being discarded due to lack of interest, the most recent requestor of a line is assigned the F state; when a cache in the F state responds, it gives up the F state to the new cache by changing its state F->S. It will be appreciated that MESIF is employed in INTEL cc-NUMA architectures.

It will be appreciated that various other MESI variants, such as MERSI, Dragon, Firefly, and so forth, also are available.

Various example embodiments for supporting selective override of cache coherence may be further understood by considering various aspects associated with efficiency of cache coherence.

It is noted that filling caches is generally relatively expensive and, further, coherence transactions typically add the following additional costs that impact the efficiency of the multiprocessor computer system.
Cost-1: While transitioning state of a cache line in a cache requires RFO, Invalidate, or Read transactions with other caches. The latency of state transition is dependent of the latency of completion of the resultant transaction.
Cost-2: Caches have to snoop for RFO, Invalidate, and Read messages. Every bus transaction in the snooping approach requires checking of cache address tags in recipient caches, which could interfere with the cache accesses of the local processor.
Cost-3: Since RFO, Invalidate, and Read transactions are sent on the shared bus, frequent transactions lead to contentions over the limited bandwidth of the shared bus.

It will be appreciated that, while Cost-2 may be alleviated by use of an inclusive L3 cache that tracks sharing status of cache lines across processors or by use of snoop filters (e.g., illustrated in FIG. 3), Cost-1 and Cost-3 may be alleviated by reducing cache coherence transactions. A description of alleviation of Cost-2, based on use of an inclusive L3 cache that tracks sharing status of cache lines across processors or based on use of snoop filters, follows. If a shared L3 cache is inclusive of the private L1 and L2 caches in each processor, then the shared L3 cache can maintain "core valid bits" per cache line. The bits indicate the processors where the cache line is present. The L3 cache manages the bits based on snooping the coherence transactions. So, any transactions generated by a processor for cache lines not shared among processors (described further below as being Trans-3 traffic) are first filtered by the L3 cache. If a bit is not set in the L3 cache, then the associated processor does not hold a copy of the cache line, thereby reducing snoop traffic to the processor. However, unmodified cache lines may be evicted from the cache of a processor without notification of the L3 cache. Therefore, a set core valid bit does not guarantee the presence of the cache line in the associated core. Generally speaking, the shared L3 cache with core valid bits has the potential to strongly improve the performance of cache coherence between cores while filtering most of the unnecessary snooping traffic. A snoop filter is a directory-based structure that monitors all coherence traffic in the shared bus in order to keep track of the coherence states of cache lines. It means that the snoop filter knows the caches that have a copy of a cache line. The snoop filter is implemented as a large table that stores recent cache lines requests, the state (e.g., MESI) of each cache line, and bits to indicate the locations that share the cache line. Thus, it can prevent the caches that do not have the copy of a cache line from making the unnecessary snooping. There are two components of snoop filter. One is a source filter that is located at a cache side and performs filtering before coherent traffics reach the shared bus. The source filter blocks transactions generated by a processor for cache lines not shared among processors (again, described further below as being Trans-3 traffic) before reaching the shared bus. The other is a destination filter that is located at a bus side and that blocks unnecessary cache coherence traffic from the shared bus towards the cache. The snoop filter is also categorized as inclusive and exclusive. The inclusive snoop filter keeps track of the presence of cache blocks in caches, whereas the exclusive snoop filter monitors the absence of cache blocks in caches. In other words, a hit in the inclusive snoop filter means that the corresponding cache block is held by caches; on the other hand, a hit in the exclusive snoop filter means that no cache has the requested cache block. If the L3-cache is non-inclusive, then use of a snoop filter is the alternative method. This may be further understood by considering various situations involving cache coherence transactions, which may be categorized as follows.
Trans-1: Transactions for cache lines shared among threads, which requires cache line transactions between the processors running the threads. In most cases, the caches do not share cache lines, since a well optimized parallel program does not share much data among threads.
Trans-2: Transactions in which a thread moves from a first processor to a second processor, in which case the cache lines re-accessed by the thread in the second processor needs to be moved from the first processor.
Trans-3: Transactions for cache lines not shared among processors. In MESI, these transactions typically are the Read transactions on I->E (denoted as Trans-3-1, which are discussed further below) and RFO transactions on I->M (denoted as Trans-3-2, which are discussed further below) on an unshared cache line. Although the cache line is not shared, the state changes still require the local processor to generate broadcasts of the transactions and wait for completion of the transactions. These transactions may be considered to be unnecessary transactions for two reasons. First, such transactions require each receiver cache to snoop and lookup the address tags, which is unnecessary snooping work as the cache does not have the cache line. Second, such transactions consume bandwidth on the shared bus for no reason.

In certain applications using multiprocessor computer systems, a critical thread may be pinned to a specific processor such that the thread will execute only on the designated processor. This can be viewed as a modification of the scheduling algorithm in a multiprocessing operating system (e.g., each thread has a tag indicating the processor to which it is pinned (or has affinity) and the scheduling algorithm ensures that the thread is executed by the pinned processor only). Processor pinning, or affinity, takes advantage of the fact that data accessed by a thread that was run by a given processor may remain in the caches of that processor. Thus, it eliminates Trans-2 for such threads. Scheduling that thread to execute on the same processor improves its performance by reducing cache misses. Moreover, any data that is exclusive to the thread is only read or written by the pinned processor. For example, the procedure/function call stack is exclusive to a thread. Similarly, for example, there could be heap allocated data or global data (or other types of data) that may be exclusively accessed by that thread only. Such data is never read and written by processors other than the local processor (i.e., where the thread is pinned). Herein, as indicated above, data that is local to a processor of a multiprocessor computer system, such that it is only accessed by that processor and not accessed by other processors of the multiprocessor computer system and, thus, does not have to be coherent across the caches in the other processors of the multiprocessor computer system, is referred to as PLD (processor local data). However, snooping protocols do not make any exceptions for PLD as such protocols are agnostic of the nature of the data cached by processors and, thus, in the presence of such snooping protocols PLD will generate Trans-3 coherence traffic as follows.
Trans-3-1: Whenever the local processor loads PLD into cache line of its private caches, the snooping protocol broadcasts a Read request to other processors over the shared bus to check if any processor has the cache line. Upon receiving negative acknowledgements from all processors, the local processor brings the PLD from upper memory hierarchy into private caches and changes the state of cache lines from I->E.
Trans-3-2: Whenever PLD is modified by the local processor such that the PLD is missing in its private caches, the snooping protocol broadcasts an RFO to other processors over the shared bus. Upon receiving negative acknowledgements from all processors, the local processor brings the PLD from upper memory hierarchy into private caches and changes the state of cache line from I->M.

It is noted that Trans-3-1 and Trans-3-2 are prevalent under various conditions. For example, Trans-3-1 and Trans-3-2 are prevalent when a thread is I/O bound, where PLD is I/O data which never resides in the caches longer. For example, Trans-3-1 and Trans-3-2 also arises when the PLD is part of procedure/function call stack such that stack elements are continually getting thrashed by private caches (i.e., evicted by private caches due to conflicts by I/O data so forth).

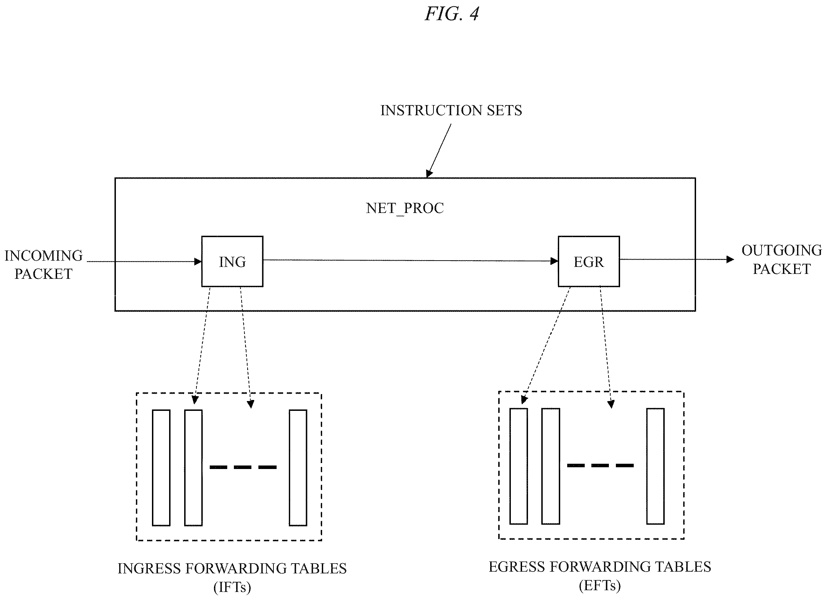

It is further noted that a high-performance application where Trans-3-1 and Trans-3-2 occur frequently is the forwarding plane of an NFV based router, an example of which is presented with respect to FIG. 4.

FIG. 4 depicts an example of a high-level architecture of a forwarding plane in an NFV based router.

In an NFV based router, typically, one or more cores of a multi-core processor are dedicated for the forwarding plane. Typically, the forwarding plane is implemented by a single program, which is denoted as NET_PROC herein (where NET_PROC is a mnemonic for Network Processor). Herein, unless indicated otherwise, the terms "program" and "thread" are used interchangeably. A thread is a thread of execution or task in a multi-tasking operating system. For example, assume that a processor has 16 cores and, out of the 16 cores, 10 cores are assigned for the forwarding plane. Then, each of the 10 cores assigned to the forwarding plane would execute NET_PROC (i.e., instances of NET_PROC are pinned to each of the 10 cores). This means the processor can process and forward 10 packets in parallel. The remaining 6 cores may be assigned for various control plane programs of the router.

In an NFV router based on NET PROC, NET _PROC is repeatedly executed by a processor core for every incoming packet. NET _PROC receives an incoming packet on a port, processes the packet, and sends out the packet on another port. NET _PROC invokes two independent functions - ING and EGR, which are typically implemented as subroutines to process incoming (ingress) and outgoing (egress) packets, respectively. The control plane programs the forwarding states for packet flows in various Ingress Forwarding Tables (IFTs) and Egress Forwarding Tables (EFTs). ING looks up IFTs while processing an incoming packet and EGR looks up EFTs while processing an outgoing packet. ING may perform ingress functions such as decapsulation of the packet, classification of the packet based on various headers on the packet, looking up forwarding tables (i.e., IFTs) associated with respective forwarding contexts and accordingly setting up the input parameters for EGR, and so forth. EGR may perform egress functions such as identifying forwarding contexts on a packet based on input parameters from ING, looking up forwarding tables (i.e., EFTs) associated with respective forwarding contexts, modifying and adding appropriate encapsulations on respective forwarding contexts, sending the packet out to the appropriate port, and so forth.

In an NFV router based on NET PROC, the PLD in each processor running an instance of NET_PROC includes the following: (1) the procedure call stack of the NET_PROC instance and (2) packets processed by the NET_PROC instance (e.g., incoming packets are distributed across the processors running NET _PROC and each processor independently and completely processes the packet and, thus, a packet is never shared across processors).

In an NFV router based on NET _PROC, ING may operate as follows where a snooping protocol is used. To parse packet headers and perform decapsulation, ING reads the respective header portions. When the headers are accessed for the first time, they are loaded from memory to cache, as a result of compulsory misses in the caches. The cache lines occupied by the headers change state from I->E, so the snooping protocol broadcasts a Read request (Trans-3-1) across the shared bus. Subsequent reads into respective headers does not generate any broadcast since their cache lines remains in the E state.

In an NFV router based on NET PROC, EGR may operate as follows where a snooping protocol is used. When EGR adds or modifies headers onto the portion of the packet that is not accessed before, then the snooping protocol broadcasts RFO across the shared bus (Trans-3-2).

It will be appreciated that, with increasing numbers of processors on a shared bus, Trans-3 increases as well (e.g., cache coherence traffic, generally, is proportional to the square of the number of processors), thereby consuming significant bandwidth on the shared bus and resulting in significant power consumption. The unnecessary broadcast also increases the unwarranted snooping activity at the private caches on each processor.

Various example embodiments for preventing generation of PLD originated Trans-3 in a multiprocessor computer system are presented herein. Various example embodiments for preventing generation of PLD originated Trans-3 in a multiprocessor computer system may be configured to prevent generation of PLD originated Trans-3 in the multiprocessor computer system based on various example embodiments for supporting selective override of cache coherence in the multiprocessor computer system. Various example embodiments for supporting selective override of cache coherence, by preventing generation of PLD originated Trans-3 traffic by the source processor itself and, thus, reducing the number of snoop requests presented to each cache in a multiprocessor computer system, may obviate the need for use of various mechanisms to contain PLD originated Trans-3 traffic in a multiprocessor computer system (e.g., requiring the L3 cache or other shared cache to maintain "core valid bits" or other suitable indicators per cache line, use of snooping filters, or the like). Various example embodiments for supporting selective override of cache coherence, by preventing generation of PLD originated Trans-3 traffic by the source processor itself, may increase overall performance and power efficiency of a multiprocessor computer system without incurring additional latency, complexity, power, or cost in the multiprocessor computer system.

Various example embodiments for supporting selective override of cache coherence may be configured to support selective override of cache coherence where the selectivity is based on the type of data that is exempted from cache coherence (e.g., PLD or other suitable types of data). Various example embodiments for supporting selective override of cache coherence may be configured to support selective override of cache coherence based on programmable control of the processor to support identification of data that is exempted from cache coherence and use of a snooping protocol that is configured to support states that are configured to support identification of data that is exempted from cache coherence. Various example embodiments for supporting selective override of cache coherence based on programmable control of the processor to support identification of data that is exempted from cache coherence may be configured to support identification of data that is exempted from cache coherence based on memory region configuration information indicative that the memory region with which a memory operation for the data element is associated is configured to store a type of data to be exempted from cache coherence (e.g., memory region configuration information maintained in a control register of the processor, such as a range register, a page attribute table, or the like), may be based on a processor instruction indicative of the memory operation for the data element (e.g., based on a determination that a processor instruction including the memory operation for the data element is indicative that the memory operation is for a type of data to be exempted from cache coherence, such as based on an instruction name of the processor instruction), or the like, as well as various combinations thereof. Various example embodiments for supporting selective override of cache coherence by a processor may be configured to support selective overriding of cache coherence for a data element where such selective overriding of cache coherence for the data element may include exemption of the data element from cache coherence on a memory operation by the processor for the data element and exemption of the data element from cache coherence during handling of a cache coherence transaction on the data element (e.g., a cache coherence transaction from another processor). Various example embodiments for supporting selective override of cache coherence based on use of a snooping protocol that is configured to support states that are configured to support identification of data that is exempted from cache coherence may be configured to support use of a "private-clean" state (which may be denoted as a "C" state) and a "private-dirty" state (which may be denoted as a "D" state) in the snooping protocol for identification of data that is exempted from cache coherence. In at least some example embodiments, the new states may be integrated into the snooping protocol that is used by the multiprocessor for cache coherence to provide a snooping protocol that is configured to support cache coherence while also supporting selective override of cache coherence for certain types of data to be exempted from cache coherence (e.g., in embodiments in which the new states are added to MESI the resulting snooping protocol may be referred to as MESI-DC or using any other suitable name, in embodiments in which the new states are added to MOESI the resulting snooping protocol may be referred to as MOESI-DC or using any other suitable name, in embodiments in which the new states are added to MESIF the resulting snooping protocol may be referred to as MESIF-DC or using any other suitable name, and so forth).

Various example embodiments for supporting selective override of cache coherence, as indicated above, may be configured to support selective override of cache coherence based on use of a snooping protocol that is configured to support states that are configured to support identification of data that is exempted from cache coherence. In at least some example embodiments, a snooping protocol that is configured to support states that are configured to support identification of data that is exempted from cache coherence may be configured to support use of a "private-clean" state (which may be denoted as a "C" state) and a "private-dirty" state (which may be denoted as a "D" state) in the snooping protocol for identification of data that is exempted from cache coherence. In the "C" state, the cache line is clean and is consistent with the copies in the memory hierarchy, and the cache line is not sharable with other caches and, thus, is exclusive to the local processor. In the "D" state, the cache line is modified and is yet to be updated to the memory hierarchy, and the cache line is not sharable with other caches and, thus, is exclusive to the local processor.

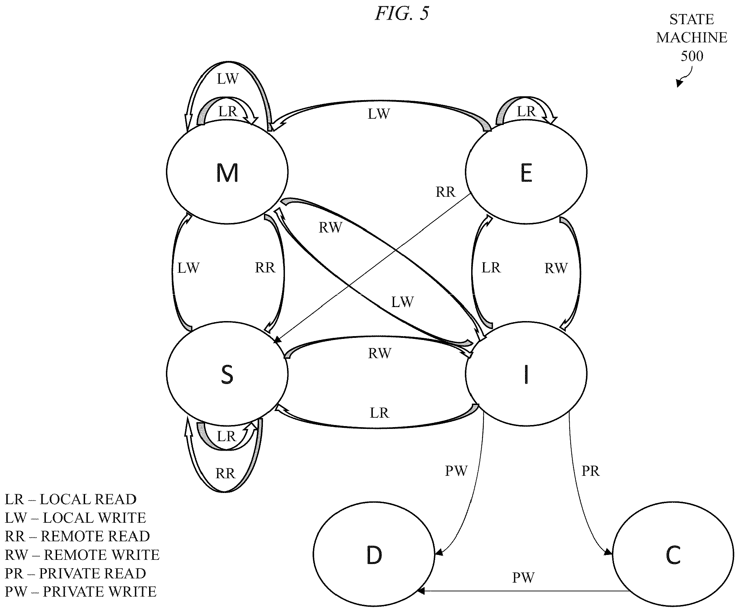

It will be appreciated that the operation of a snooping protocol including "private-clean" and "private-dirty" states to support selective override of cache coherence may be further understood by considering operation of a version of MESI modified to support use of "private-clean" and "private-dirty" states to support selective override of cache coherence (which, as indicated above, may be referred to as MESI-DC). An example embodiment of a state machine for a MESI-DC protocol is presented in FIG. 5.

FIG. 5 depicts an example embodiment of a state machine of a snooping protocol configured to support selective override of cache coherence. In FIG. 5, the state machine 500 is a version of MESI, denoted herein as MESI-DC, that has been modified to include "private-clean" and "private-dirty" states which are configured to support selective override of cache coherence. The state machine includes the following states: Modified (M), Exclusive (E), Shared (S), Invalid (I), Private-Clean (C), and Private-Dirty (D). In the M state, the local processor has modified the cache line (which also implies that it is the only copy in any cache). In the E state, the cache line is not modified, but is known to not be loaded into any other processor cache. In the S state, the cache line is not modified and might exist in another processor cache. In the I state, the cache line is invalid, i.e., unused. For supporting selecting override of cache coherence, assume that, initially, a candidate cache line for PLD is empty and, thus, invalid. If PLD is loaded into the cache for writing, the cache line changes the state to Private-Dirty; the event triggering the state change is shown as "private write" in FIG. 5. If PLD is loaded for reading, the cache line changes the state to Private-Clean; the event triggering the state change is shown as "private read" in FIG. 5. If the cache line holding PLD already exists in the cache in the Private-Clean state and the processor writes into the cache line, then the state changes to Private-Dirty. Across the three state changes related to the Private Clean and Private dirty states, there is no generation of cache coherence transaction by the local processor. Thus, private read or write events enable a cache line to be exempted from cache coherence. A processor generates private read or write events when the data being read or written into a PLD. It will be appreciated that, since identification of a data as PLD lies in the jurisdiction of the running program/thread, the processor may provide programmable control of the processor to the program/thread for selective overriding of cache coherence. As indicated above and discussed further below, such programmable control may be provided in various ways, such as based on configuration of the processor with memory region information indicative as to which cache lines of the cache memory of the processor are within PLD memory regions including PLD to be exempted from cache coherence, based on enhancement of one or more processor instructions of the processor to support identification of PLD to be exempted from cache coherence, or the like, as well as various combinations thereof).

Various example embodiments for supporting selective override of cache coherence may be configured to support selective override of cache coherence based on programmable control of the processor. Various example embodiments for supporting selective override of cache coherence may be configured to support selective override of cache coherence based on programmability of the processor to support selective overriding of cache coherence for a data element operated on by the processor based on a determination by the processor that the data element is to be exempted from cache coherence (e.g., based on configuration of the processor with memory region information indicative as to which cache lines of the cache memory of the processor are within PLD memory regions including PLD to be exempted from cache coherence (e.g.. providing indications within control registers of the processor which may be checked during read and write operations), based on enhancement of one or more processor instructions of the processor (e.g., read and write instructions) to support identification of PLD to be exempted from cache coherence (e.g., providing indications within the processor instructions themselves), or the like, as well as various combinations thereof). It will be appreciated that at least some such approaches for providing programmable control of a processor to support selective overriding of cache coherence for the processor may be based on seamless extensions of processor architectures without requiring any dedicated hardware circuitry or additional cycle time.

Various example embodiments for supporting selective override of cache coherence may be configured to support selective override of cache coherence based on programmability of the processor to support selective overriding of cache coherence for a data element operated on by the processor based on a determination by the processor that the data element is to be exempted from cache coherence. Various example embodiments for supporting selective override of cache coherence may be configured to support selective override of cache coherence based on configuration of the processor with memory region information indicative as to which cache lines of the cache memory of the processor are within PLD memory regions including PLD to be exempted from cache coherence.

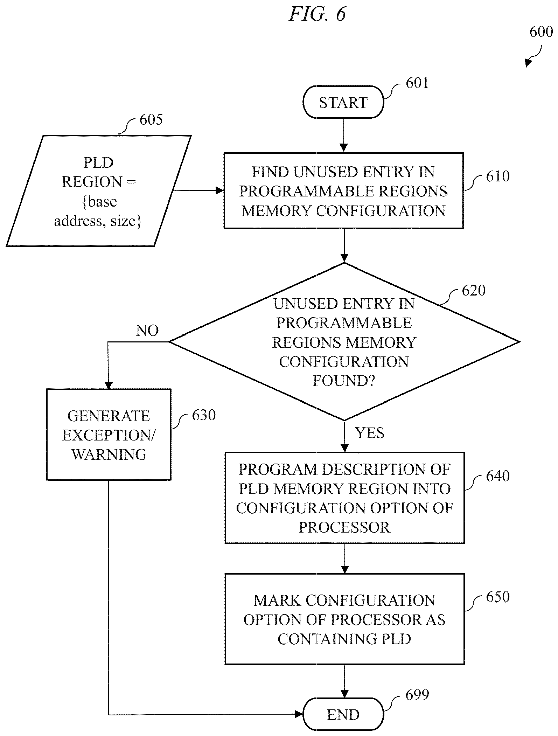

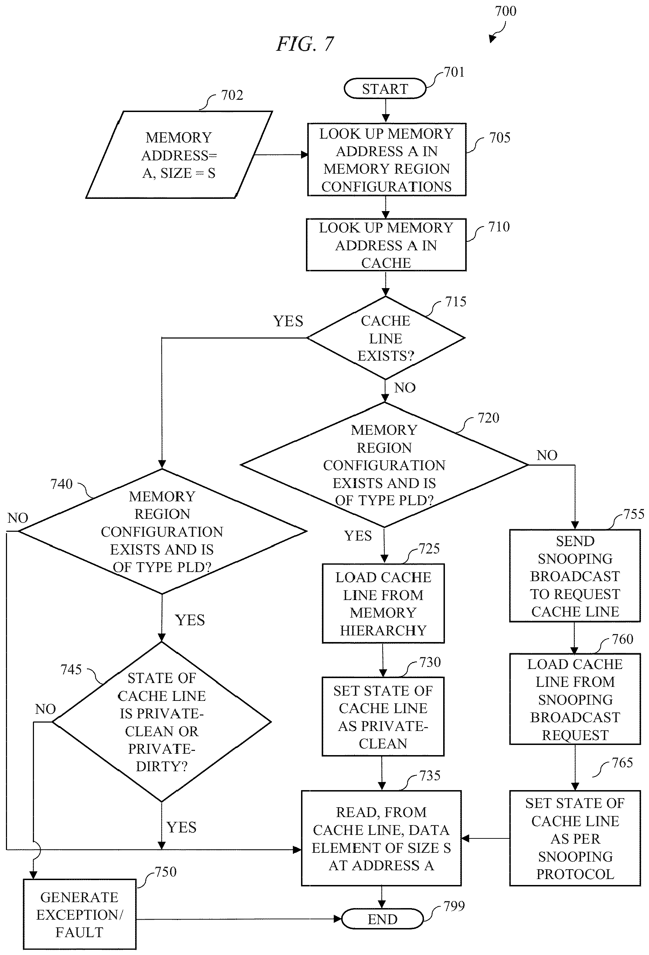

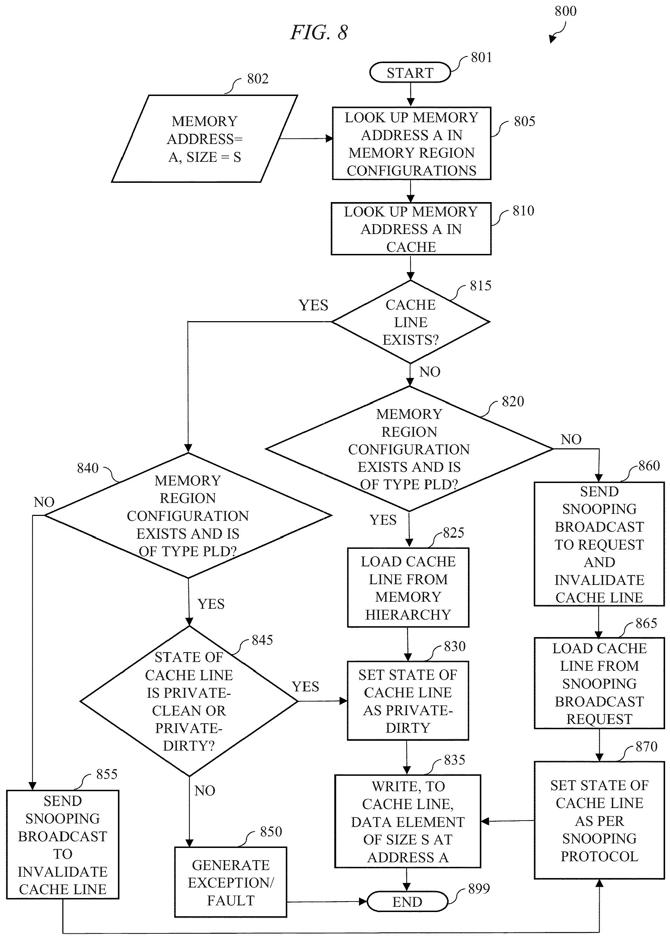

In at least some example embodiments, selective override of cache coherence based on use of processor instructions of the processor may be provided based on configuration of the processor with memory region information indicative as to which cache lines of the cache memory of the processor are within PLD memory regions (namely, cache lines of the cache memory of the processor including PLD for which overriding of cache coherence is to be used). The PLD is organized into memory regions and the processor is configured with the memory region information (e.g., base address of the region and its size/range) indicative as to which memory regions are PLD memory regions. The memory regions in the including PLD may be configured using one or more control registers in processor architecture of the processor. When the processor reads or writes data to a memory address in cache, then the processor refers to the memory region information of the memory address in the cache to determine whether the memory region is a PLD memory region (e.g., by checking the memory address to determine whether the memory address belongs to a PLD memory region). If the data is located in a PLD memory region, then the corresponding cache line is set to the Private-Clean state or the Private-Dirty state, thereby excluding the cache line from cache coherence. It will be appreciated that the PLD memory regions of the processor are aligned by the size of a cache line since cache coherence is selectively overridden at the granularity of a cache line. It is noted that the procedure by which a PLD memory region is configured in a processor may be further understood by way of reference to FIG. 6, the procedure by which a processor reads from a memory address of the local cache of the processor where the processor supports PLD memory regions may be further understood by way of reference to FIG. 7, and the procedure by which a processor writes to a memory address of the local cache of the processor where the processor supports PLD memory regions may be further understood by way of reference to FIG. 8.

FIG. 6 depicts an example embodiment of a method by which a processor configures a PLD memory region in the processor. It will be appreciated that, although primarily presented as being performed serially, at least a portion of the functions of method 600 may be performed contemporaneously or in a different order than as presented with respect to FIG. 6.

At block 601, method 600 begins. As indicated at block 605, the input to method 600 is the description of a PLD memory region, which may be provided in terms of the base address (i.e., starting address) of the PLD memory region and the associated size of the PLD memory region (denoted as PLD Region = {base address, size}). It will be appreciated that the processor provides a set of configuration options to learn about "special" memory regions that may be accessed by the processor during execution of programs.

At block 610, the processor finds an unused entry in programmable regions memory configuration in the processor, i.e., no memory region is configured yet.

At block 620, the processor determines whether an unused entry in programmable regions memory configuration in the processor is found. If, at block 620, an unused entry in programmable regions memory configuration in the processor is not found, the method 600 proceeds to block 630. If, at block 620, an unused entry in programmable regions memory configuration in the processor is found, the method 600 proceeds to block 640.

At block 630, which is entered based on a determination at block 620 that an unused entry in programmable regions memory configuration in the processor is not found, the processor raises an exception/fault. From block 630, method 600 proceeds to block 699, where method 600 ends.

At block 640, which is entered based on a determination at block 620 that an unused entry in programmable regions memory configuration in the processor is found, the processor programs the description of the PLD memory region (e.g., the base address and size of the PLD memory region) into the configuration option of the processor.

At block 650, the processor marks the configuration option of the processor as containing PLD. From block 650, method 600 proceeds to block 699, where method 600 ends.

At block 699, as indicated above, the method 600 ends.

FIG. 7 depicts an example embodiment of a method by which a processor reads from a memory address of a local cache of the processor where the processor supports PLD memory regions. It will be appreciated that, although primarily presented as being performed serially, at least a portion of the functions of method 700 may be performed contemporaneously or in a different order than as presented with respect to FIG. 7.

At block 701, method 700 begins. As indicated at block 702, the input to method 700 is a request for a data element of size S at memory address A.

At block 705, the processor looks up the address A among the memory regions configured in the processor. At block 710, the processor looks up address A in the cache for the matching cache line. It will be appreciated that blocks 705 and 710 may be performed in parallel.

At block 715, the processor determines whether a cache line is found (at block 710). If, at block 715, the processor determines that a cache line is not found (i.e., a miss), then method 700 proceeds to block 720. If, at block 715, the processor determines that a cache line is found, then method 700 proceeds to block 740.

At block 720, which is entered based on a determination at block 715 that a cache line is not found (i.e., a miss), the processor determines whether a memory region configuration was found (at block 705) and if it is of type PLD. If the processor determines that the outcome of block 720 is true (e.g., a memory region configuration was found and it is of type PLD), then method 700 proceeds to block 725. If the processor determines that the outcome of block 720 is false (e.g., either a memory region configuration was not found or a memory region configuration was found but it is not of type PLD), then method 700 proceeds to block 755.

At block 725, which is entered based on a determination at block 720 that a memory region configuration was found and is of type PLD, the processor loads the missing cache line from the memory hierarchy, thereby bypassing any snooping broadcast by the processor on the shared bus to request the cache line. At block 730, the processor sets the state of the cache line to Private-Clean. At block 735, the processor reads the data element of size S at address A from the cache line. From block 735, method 700 proceeds to block 799, where method 700 ends.

At block 740, which is entered based on a determination at block 715 that a cache line is found, the processor determines whether a memory region configuration was found (at block 705) and if it is of type PLD. If the processor determines that the outcome of block 740 is true (e.g., a memory region configuration was found and it is of type PLD), then method 700 proceeds to block 745. If the processor determines that the outcome of block 740 is false (e.g., either a memory region configuration was not found or a memory region configuration was found but it is not of type PLD), then method 700 proceeds to block 735 (at which point, as discussed above, the processor reads the data element of size S at address A from the cache line) and then proceeds to block 799 (where method 700 ends).

At block 745, which is entered based on a determination at block 740 that a memory region configuration was found and is of type PLD, the processor determines whether the state of the cache line is Private-Clean or Private-Dirty. If the state of the cache line is Private-Clean or Private-Dirty, then method 700 proceeds to block 735 (at which point, as discussed above, the processor reads the data element of size S at address A from the cache line) and then proceeds to block 799 (where method 700 ends). If the state of the cache line is not Private-Clean or Private-Dirty, then method 700 proceeds to block 750.

At block 750, which is entered based on a determination at block 745 that the state of the cache line is not Private-Clean or Private-Dirty, the processor generates an exception/fault. It is noted that this is an error condition since the existing cache line does not contain PLD, whereas the memory region configuration is PLD. From block 750, method 700 proceeds to block 799, where method 700 ends.

At block 755, which is entered based on a determination at block 720 that a memory region configuration was not found or a memory region configuration was found but it is not of type PLD, the processor sends, on the shared bus, a snooping broadcast requesting the cache line. At block 760, the processor receives the cache line as the response to the snooping broadcast either from another processor or from the memory hierarchy. At block 765, the processor sets the state of the cache line based on the snooping protocol and the sender of the cache line. For example, if the protocol is MESI-DC, then the state of the cache line is set to Shared if the sender of the cache line is another processor or the state of the cache line is set to Exclusive. From block 765, method 700 proceeds to block 735 (at which point, as discussed above, the processor reads the data element of size S at address A from the cache line) and then proceeds to block 799, where method 700 ends.

At block 799, as indicated above, the method 700 ends.

FIG. 8 depicts an example embodiment of a method by which a processor writes to a memory address of a local cache of the processor where the processor supports PLD memory regions. It will be appreciated that, although primarily presented as being performed serially, at least a portion of the functions of method 800 may be performed contemporaneously or in a different order than as presented with respect to FIG. 8. At block 801, method 800 begins.

At block 801, method 800 begins. As indicated at block 802, the input to method 800 is a write action of a data element of size S to memory address A.

At block 805, the processor looks up the address A among the memory regions configured in the processor. At block 810, the processor looks up address A in the cache for the matching cache line. It will be appreciated that blocks 805 an 810 may be performed in parallel.

At block 815, the processor determines whether a cache line is found (at block 810). If, at block 815, the processor determines that a cache line is not found (i.e., a miss), then method 800 proceeds to block 820. If, at block 815, the processor determines that a cache line is found, then method 800 proceeds to block 840.

At block 820, which is entered based on a determination at block 815 that a cache line is not found (i.e., a miss), the processor determines whether a memory region configuration was found (at block 805) and if it is of type PLD. If the processor determines that the outcome of block 820 is true (e.g., a memory region configuration was found and it is of type PLD), then 800 proceeds to block 825. If the processor determines that the outcome of block 820 is false (e.g., either a memory region configuration was not found or a memory region configuration was found but it is not of type PLD), then 800 proceeds to block 855.

At block 825, which is entered based on a determination at block 820 that a memory region configuration was found and is of type PLD, the processor loads the missing cache line from the memory hierarchy, thereby bypassing any snooping broadcast by the processor on the shared bus to request the cache line. At block 830, the processor sets the state of the cache line to Private-Dirty. At block 835, the processor writes the data element of size S to the cache line at address A. From block 835, method 800 proceeds to block 899, where method 800 ends.

At block 840, which is entered based on a determination at block 815 that a cache line is found, the processor determines whether a memory region configuration was found (at block 805) and if it is of type PLD. If the processor determines that the outcome of block 840 is true (e.g., a memory region configuration was found and it is of type PLD), then 800 proceeds to block 845. If the processor determines that the outcome of block 840 is false (e.g., either a memory region configuration was not found or a memory region configuration was found but it is not of type PLD), then method 800 proceeds to block 835 (at which point, as discussed above, the processor writes the data element of size S to the cache line at address A) and then proceeds to block 899 (where method 800 ends).

At block 845, which is entered based on a determination at block 840 that a memory region configuration was found and is of type PLD, the processor determines whether the state of the cache line is Private-Clean or Private-Dirty. If the state of the cache line is Private-Clean or Private-Dirty, then method 800 proceeds to block 830 (at which point, as discussed above, the processor sets the state of the cache line to Private-Dirty). If the state of the cache line is not Private-Clean or Private-Dirty, then method 800 proceeds to block 850.

At block 850, which is entered based on a determination at block 845 that the state of the cache line is not Private-Clean or Private-Dirty, the processor generates an exception/fault. It is noted that this is an error condition since the existing cache line does not contain PLD, whereas the memory region configuration is PLD. From block 850, method 800 proceeds to block 899, where method 800 ends.

At block 855, which is entered based on a determination at block 840 that a memory region configuration was not found or a memory region configuration was found but it is not of type PLD, the processor sends, on the shared bus, a snooping broadcast to invalidate the cache line in other caches. From block 855, the method 800 proceeds to block 870.

At block 860, which is entered based on a determination at block 820 that a memory region configuration was not found or a memory region configuration was found but it is not of type PLD, the processor sends, on the shared bus, an RFO snooping broadcast to request and invalidate the cache line. At block 865, the processor receives the cache line as the response to the snooping broadcast. At block 870, the processor sets the state of the cache line based on the snooping protocol. For example, if the protocol is MESI-DC, then the state of the cache line is set to Modified state. From block 870, method 800 proceeds to block 835 (at which point, as discussed above, the processor sets the state of the cache line to Private-Dirty) and then proceeds to block 899, where method 800 ends.

At block 899, as indicated above, the method 800 ends.

It will be appreciated that various example embodiments for supporting selective override of cache coherence based on configuration of the processor with memory region information indicative as to which cache lines of the cache memory of the processor are within PLD memory regions including PLD to be exempted from cache coherence may be further understood by considering a memory layout of a program and a set of techniques which may be used by processors for configuring and accessing various memory segments in a program.

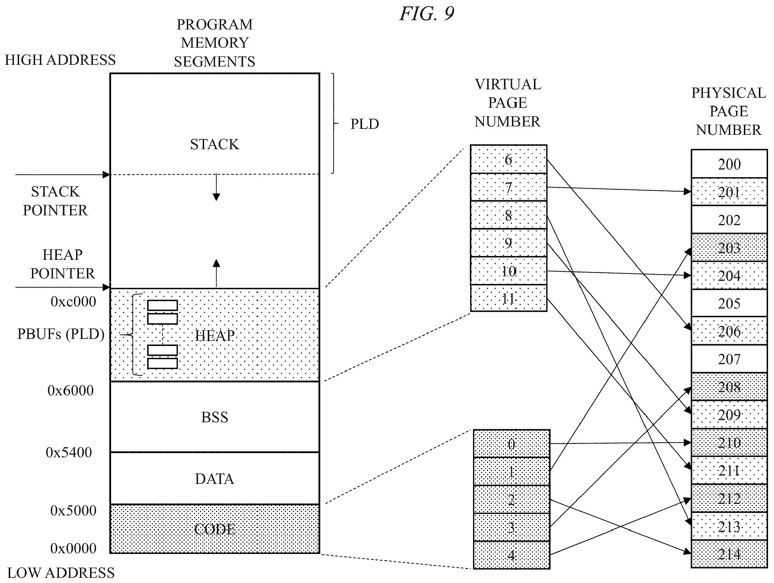

FIG. 9 depicts an example embodiment of a memory layout of a program, illustrating program memory segments and the mapping of the program memory segments to physical addresses. In general, a memory region is a specific range of addresses within a memory segment and a program typically consists of the following memory segments: a code segment, an initialized data segment, an uninitialized data segment, a stack segment and a heap segment.

In a program, the code segment contains executable instructions of the program. The code segment may be placed below the heap or stack in order to prevent heaps and stack overflows from overwriting it. Usually, the code segment is sharable so that only a single copy needs to be in memory for frequently executed programs. For example, in the forwarding plane of an NFV router, instances of NET _PROC are executed by multiple processors. So, only one copy of the executable instructions of NET_PROC is kept in memory, which is shared across all instances of NET _PROC. Also, the code segment is often read-only, to prevent a program from accidentally modifying its instructions.

In a program, the initialized data segment, typically referred to more generally as a data segment, contains the global variables and static variables in the program that are initialized by the programmer. It is noted that the data segment is not read-only, since the values of the variables can be altered at run time. This segment can be further classified into initialized read-only area and initialized read-write area. For example, the global string defined by char s[] = "hello world" in C (i.e., C programming language) and a C statement like int debug=1 outside the main (i.e. global) would be stored in the initialized read-write area. For example, a global C statement like const char* string = "hello world" makes the string literal "hello world" to be stored in initialized read-only area and the character pointer variable string in initialized read-write area.

In a program, the uninitialized data segment, typically referred to as the bss segment, is initialized to arithmetic 0 before the program starts executing. Uninitialized data starts at the end of the data segment and contains all global variables and static variables that do not have explicit initialization in source code. For example, a variable declared as "static int i;" would be contained in the bss data segment. Similarly, for example, a global variable declared as "int j;" also would be contained in the bss segment.

In a program, the stack segment traditionally adjoins the heap segment and grows in the opposite direction. The stack pointer tracks the top of the stack segment and the heap pointer tracks the top of the heap region. When the stack pointer meets the heap pointer, free memory is exhausted. It is noted that, with modern large address spaces and virtual memory techniques, they may be placed almost anywhere, but they still typically grow in opposite directions. The stack area contains the program stack, a Last-In-First-Out (LIFO) structure, typically located in the higher parts of memory. For example, in the standard x86 computer architecture it grows toward address zero, while on some other architectures it grows in the opposite direction. A stack pointer (SP) register in the processor tracks the stack pointer, and it is adjusted each time a value is pushed onto the stack. The set of values pushed for one function call is termed a stack frame which consists, at a minimum, of a return address (location to jump at the end of the function call), where automatic variables are stored, along with information that is saved each time a function is called. Each time a function is called, the address of where to return to and certain information about the environment of the caller, such as some of the machine registers, are saved on the stack. The newly called function then allocates room on the stack for its automatic and temporary variables by sliding the SP. The stack segment is never shared between programs and thus, the stack segment may be considered to be PLD.

In a program, the heap segment is the segment where dynamic memory allocation usually takes place. The heap segment begins at the end of the bss segment and grows to larger addresses from there. It is noted that at least some portions of the heap segment may be considered to be PLD. For example, in the NET_PROC program, the packet buffers (PBUFs) are allocated from the heap area. A PBUF is a reusable block in memory to hold a packet during its processing. Once a packet is processed and sent out of a port, the corresponding PBUF is reused for another new incoming packet. Typically, a NET PROC instance pre-allocates a pool of PBUFs from the heap segment, which are circulated to receive, process, and forward packets by the instance. The memory region of a PBUF pool within the heap segment is illustrated in FIG. 9. In this case, the PBUF pool is PLD since its corresponding NET _PROC instance is pinned to a processor and, thus, the memory region within the heap segment that stores the PBUF pool is PLD.

The memory segments in a program are typically configured in a virtual memory space, which is mapped to the physical memory space of the processor by using a technique called memory paging. The virtual memory space of a program can be "private" or "shared". When using private virtual memory space, each program runs in its own address space and, thus, the virtual memory addresses overlap across the programs. When using shared (or global) virtual memory space, if multiple programs share the same virtual memory space, then memory addresses of the segments between programs cannot overlap as addresses are assigned from the common address space.

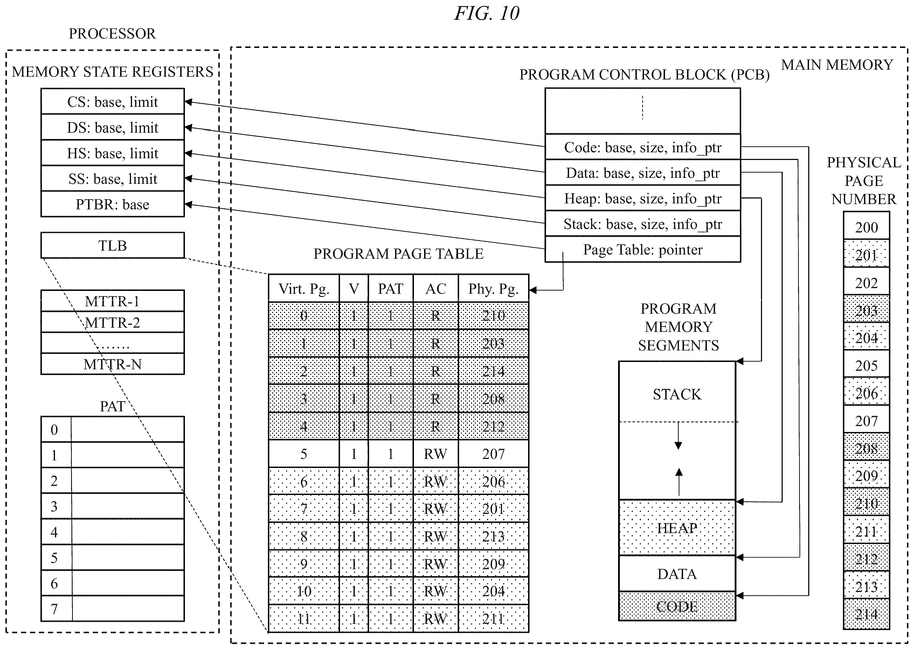

The characteristics of the memory segments of a program in memory typically are needed by a processor when the processor is executing a program. If the program is running in a virtual memory address space, then the processor needs to dynamically map virtual memory addresses in a segment into respective physical memory addresses. Typically, the virtual to physically memory mapping is performed in units of pages, wherein a page is chunk of continuous memory. This technique is called memory paging. Typical sizes of pages are 4KB, 2MB, 1GB, and so forth. An example of memory segments and mapping of the virtual pages in a memory segment to corresponding physical pages is illustrated in FIG. 9, which illustrates how the code, data, bss, heap, and stack segments are segregated into virtual pages which in turn are mapped to physical pages in memory. It is noted that the contiguous virtual pages in a segment are mapped to non-contiguous pages in physical memory, thereby providing flexibility in memory management. This also means that linear virtual memory address space of a process is non-linear in physical memory at per page granularity. In the example of FIG. 9, each page is of size 4KB. The virtual memory address range of the code segment is 0x0000-0x5000, i.e., the code segment is of size 20KB and, thus, consists of 5 virtual pages 0-4. The address range of the heap segment is 0x6001-0xc000, i.e., the heap segment is of size 24KB and, thus, consist of 6 virtual pages 6-11. Herein, the term "memory state" may be used to indicate the aggregate information about memory segments and virtual to physical address mappings of a program. An example embodiment of an implementation of memory state of a process in an OS kernel and a processor is presented with respect to FIG. 10.

FIG. 10 depicts an example embodiment of an implementation of memory state of a program in an OS kernel and a processor.

As depicted in FIG. 10, the OS kernel maintains control information about a program in a data structure in kernel memory (depicted as "Process Control Block" (PCB) in FIG. 10). The memory state in the PCB includes the base address and size of each virtual memory segment of the program, including the pointer to the management data structure on each segment (info_ptr in FIG. 10). The management data structures are included in the Process Memory Segments which, as discussed with respect to FIG. 9, maintain detailed information on each segment and the status of each allocated virtual memory page and its mapping in physical memory. The memory state in the PCB also includes a pointer to the base address of the Page Table (PT) of the program (depicted as "Program Page Table" in FIG. 10). The PT includes the mapping information of virtual memory pages to physical memory pages, which is derived from the Program Memory Segments information. The difference is that the structure of the PT is specific to the processor architecture, since it is read out by the processor during execution of the program.

As depicted in FIG. 10, the PT is an array of Page Table Entries (PTE). Each PTE includes the mapping information of a virtual memory page to a physical memory page which, as indicated above, is derived from the Program Memory Segments information. If the size of a PTE is x bytes, then the mapping information of virtual memory page p is located in entry p in the table, which is at address = base address of PT + x^{∗}p. Each PTE includes a valid bit (V) which indicates whether the page is valid or not. Each PTE also includes a PAT bit which an index to the entry in the PAT. Each PTE also includes access bits (AC) that indicate whether the page is read only (R) or both read-writable (RW). For example, code segment is only readable whereas heap segment is both readable and writable. Each PTE also includes physical page number information which provides the physical page number to which that virtual page is mapped. The Physical Pages depicted in FIG. 10 are the actual pages in physical memory that holds the contents of the mapped virtual memory pages.

As depicted in FIG. 10, the processor provides a set of Segment Registers (depicted in FIG. 10 as Memory State Registers), where the memory state of the program is loaded whenever the program is scheduled for execution. In FIG. 10, the processor provides the following Segment Registers: (1) a Code Segment (CS) Register, (2) a Data Segment (DS) Register, a Heap Segment (HS) Register, a Stack Segment (SS) Register, and a Page Table Base Register (PTBR) which contains the base address to the Program Page Table. The processor also includes a cache called the Translation Lookaside Buffer (TLB) which caches frequently accessed entries from the Program Page Table, in order to avoid reading those from memory. For every memory access, the segmentation unit in the Memory Management Unit (MMU) of the processor reads the segment registers to map the address to the appropriate segment. If the address is within the bounds of the mapped segment (i.e., base <= address < base + size), then it is considered a valid address. The output of the segmentation unit is the linear address in the virtual memory space of the program. Then, the paging unit in the MMU looks up the TLB or Page Table (e.g., if TLB is missed) to translate the linear address to the physical memory address.

It will be appreciated, at least from FIG. 10, that PLD memory regions cannot be described using the segment registers. In the example of NET_PROC, the entire stack segment is PLD, but the same is not the case with heap wherein a specific region within the heap segment is only PLD (i.e., the pool of PBUFs). Thus, additional memory states are required in the processor to mark PLD memory regions of finer granularity. While a processor may support programmable techniques for memory regions that alter the behavior of caches, such techniques generally are supplementary to segment registers and memory paging. For example, in an x86 processor architecture, such supplementary techniques may be offered by use of either or both of a Memory Type Range Register (MTRR) or a Page Attribute Table (PAT). In at least some example embodiments, in which the processor is an x86 processor, selective override of cache coherence based on configuration of the processor with memory region information indicative as to which cache lines of the cache memory of the processor are within PLD memory regions including PLD to be exempted from cache coherence may be provided based on one or more of an extension to the MTRR, an extension to the PAT, or the like, as well as various combinations thereof.

In at least some example embodiments, in which the processor is an x86 processor, selective override of cache coherence based on configuration of the processor with memory region information indicative as to which cache lines of the cache memory of the processor are within PLD memory regions including PLD to be exempted from cache coherence may be provided based an extension to the MTRR. MTRRs are a set of processor control registers that provide system software with control of how accesses to memory ranges are cached. It will be appreciated that, in certain other processor architectures (i.e., other than x86), these control registers are also known as Address Range Registers (ARRs). Possible access modes to memory ranges in MTRRs can be as follows: uncached, write-through, write-combining, write-protect, and write-back. The uncached access mode means that data in the memory range must not be cached and, thus, read and write must also be to/from main memory (e.g., typically, memory mapped I/O regions are set for this mode, if the processor directly writes into the I/O device). The write-through access mode means that any data in the memory range that is written by the processor into L1 cache must be updated across the entire memory hierarchy. The write-combining access mode allows bus write transfers to be combined into a larger transfer before bursting them over the bus, to allow more efficient writes to system resources like graphics card memory. The write-protect access mode means that data in the memory range is read only and cannot be written. The write-back access mode means that any data in the memory range that is written by the processor into the L-1 cache is marked as dirty and is not updated into the upper memory hierarchy; rather, the write to the upper memory hierarchy is postponed until the modified content in the L1 cache is about to be replaced by another cache block. In at least some example embodiments, in order to support selective override of cache coherence, MTRRs may be modified to support an additional mode access mode (referred to herein as Private Mode, although it will appreciated that other names may be used for this mode) which means that any data in the memory range is made exception from cache coherence (e.g.,. PLD regions may be configured with this mode).

In at least some example embodiments, in which the processor is an x86 processor, selective override of cache coherence based on configuration of the processor with memory region information indicative as to which cache lines of the cache memory of the processor are within PLD memory regions including PLD to be exempted from cache coherence may be provided based an extension to the PAT. The PAT is a processor supplementary capability extension to the page table format of certain x86 processors. Like MTRRs, PATs allow for fine-grained control over how areas of memory are cached, and are a companion feature to the MTRRs. Unlike MTRRs, which provide the ability to manipulate the behavior of caching for a limited number of fixed physical address ranges, PAT allows for such behavior to be specified on a per-page basis, greatly increasing the ability of the operating system to select the most efficient behavior for any given task. PAT is a Model Specific Register (MSR) in x86 that contains 8 entries, each specifying one of 6 possible cache modes. A page table entry (PTE) in x86 references one of those MSR entries via 3-bits in the PTE: _PAGE_PAT, _PAGE_PWT and _PAGE_PCD (in FIG. 10, the column PAT in Program Page Table consists of these 3 bits to accommodate the 8 entries in PAT). In at least some example embodiments, in order to support selective override of cache coherence, PATs may be modified to support a new mode entry (referred to herein as Private Mode, although it will appreciated that other names may be used for this mode) which means that the page referring to this mode in its PTE is made except from cache coherence (e.g., the PTE for the pages allocated to PLD points to the PAT entry configured in this mode such that, when PLDs are configured using PAT, the PLDs must be allocated by a program at per page granularity). It will be appreciated that an unused entry in PAT (e.g., entry "6" or entry "7") may be used to support Private Mode or that Private Mode may be supported in other ways.

It will be appreciated that, although primarily presented herein with respect to embodiments in which configuration of the processor with memory region information indicative as to which cache lines of the cache memory of the processor are within PLD memory regions is used to support selective override of cache coherence in a processor using a particular type of ISA (namely, an x86 ISA), configuration of the processor with memory region information indicative as to which cache lines of the cache memory of the processor are within PLD memory regions may be used to support selective override of cache coherence for processors using various other types of ISAs (e.g., ARM, MIPS, or the like).

It will be appreciated that various example embodiments for supporting selective override of cache coherence based on configuration of the processor with memory region information indicative as to which cache lines of the cache memory of the processor are within PLD memory regions including PLD to be exempted from cache coherence may be further understood by considering use of such embodiments in an NFV application. For example, in an NFV application, the packet buffers used for packet processing are pooled together into a memory region and the processor sets the memory region in the control register to indicate that the packets in the packet buffers are PLD and, then, whenever the processor reads a cache block from its local cache or writes a cache block into its local cache, it also checks if the cache block belongs to one of the memory regions in the control register and sets the state of the cache lines appropriately (e.g., if the cache block belongs to one of the memory regions in the control register, then the processor sets the state of the cache lines to C or D). It will be appreciated that various example embodiments for supporting selective override of cache coherence based on configuration of the processor with memory region information indicative as to which cache lines of the cache memory of the processor are within PLD memory regions including PLD to be exempted from cache coherence may be utilized by processors providing various other types of applications.

Various example embodiments for supporting selective override of cache coherence may be configured to support selective override of cache coherence based on configuration of the processor with memory region information indicative as to which cache lines of the cache memory of the processor are within PLD memory regions including PLD to be exempted from cache coherence in various other ways.

Various example embodiments for supporting selective override of cache coherence may be configured to support selective override of cache coherence, based on programmability of the processor to support selective overriding of cache coherence for a data element operated on by the processor based on a determination by the processor that the data element is to be exempted from cache coherence, in various other ways.

Various example embodiments for supporting selective override of cache coherence may be configured to support selective override of cache coherence based on programmability of the processor to support selective overriding of cache coherence for a data element operated on by the processor based on a determination by the processor that the data element is to be exempted from cache coherence. Various example embodiments for supporting selective override of cache coherence may be configured to support selective override of cache coherence based on use of processor instructions of the processor to identify PLD to be exempted from cache coherence.

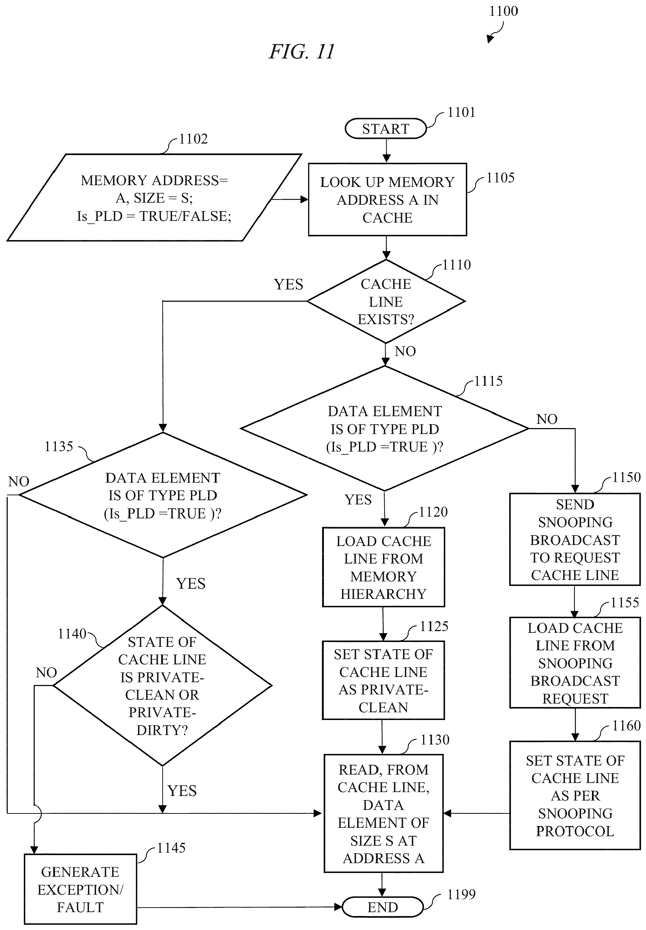

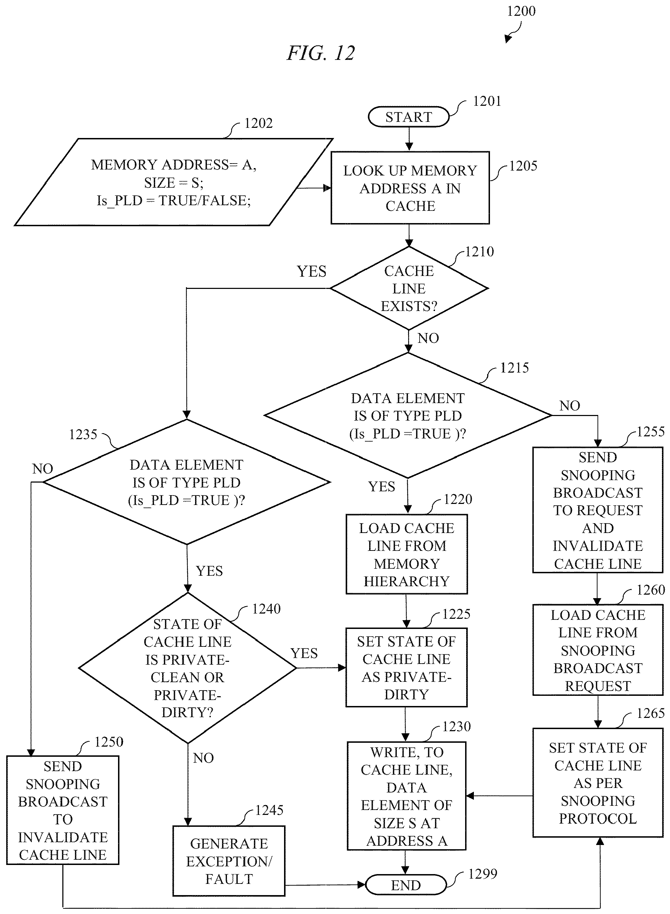

In at least some example embodiments, selective override of cache coherence based on use of processor instructions of the processor may be provided by enhancing one or more instructions of the processor. In at least some example embodiments, selective override of cache coherence based on use of processor instructions of the processor may be provided by enhancing an instruction of the processor that includes a memory operand (e.g., read and write instructions) to indicate whether the memory operand of the instruction is a PLD to be exempted from cache coherence (where such an instruction is referred to herein as a PLD instruction). It is noted that, depending on the ISA, the PLD instruction may not be a specific instruction, but, rather, an instruction that has been enhanced to specify if its memory operand is PLD. In at least some example embodiments, when the processor executes a PLD instruction indicating its memory operand as PLD, the read and write of the memory operand to a cache may include the following clauses: (1) if the cache line containing the operand is not found in the cache then, after loading the missing memory block from the memory hierarchy into a cache line, the state of the cache line is set as Private-Clean (C state) if the instruction reads the operand or the state of the cache line is set as Private-Dirty (D state) if the instruction writes the operand and (2) if the cache line containing the operand is found in the cache then the state of the cache line must be either Private-Clean (C state) or Private-Dirty (D state) and, once a cache line is set to one of the two states, then any subsequent access to the cache line must be made with PLD instructions only, otherwise the processor should generate a fault or exception. It is noted that the procedure by which a PLD instruction is used to read a memory operand from the local cache of the processor may be further understood by way of reference to FIG. 11 and that the procedure by which a PLD instruction is used to write a memory operand to the local cache of the processor may be further understood by way of reference to FIG. 12.

FIG. 11 depicts an example embodiment of a method by which a processor uses a PLD instruction to read a memory operand from a local cache (e.g., L1) of the processor. It will be appreciated that, although primarily presented as being performed serially, at least a portion of the functions of method 1100 may be performed contemporaneously or in a different order than as presented with respect to FIG. 11. At block 1101, method 1100 begins.

At block 1101, method 1100 begins. As indicated at block 1102, the input to method 1100 is a request for a data element of size S at memory address A and an indication as to whether or not the data element is a PLD or not (i.e., Is_PLD = true/false). If the request is made by a PLD instruction then Is PLD is true, otherwise Is PLD is false.

At block 1105, the processor looks up the address A in the cache for the matching cache line.

At block 1110, the processor determines whether a cache line is found (at block 1105). If, at block 1110, the processor determines that a cache line is not found (i.e., a miss), then method 1100 proceeds to block 1115. If, at block 1110, the processor determines that a cache line is found, then method 1100 proceeds to block 1135.

At block 1115, which is entered based on a determination at block 1110 that a cache line is not found (i.e., a miss), the processor determines whether the requested data element is of type PLD (i.e., whether Is_PLD is true at block 1105). If the requested data element is of type PLD (i.e., Is PLD is true at block 1105), then method 1100 proceeds to block 1120. If the requested data element is not of type PLD (i.e., Is PLD is false at block 1105), then method 1100 proceeds to block 1150.

At block 1120, which is entered based on a determination at block 1115 that the requested data element is of type PLD, the processor loads the missing cache line from the next entity in the memory hierarchy, thereby bypassing any snooping broadcast by the processor on the shared bus to request the cache line. At block 1125, the processor sets the state of the cache line to Private-Clean. At block 1130, the processor reads the data element of size S at address A from the cache line. From block 1130, method 1100 proceeds to block 1199, where method 1100 ends.

At block 1135, which is entered based on a determination at block 1110 that a cache line is found (i.e., a hit), the processor determines whether the requested data element is of type PLD (i.e., whether Is_PLD is true at block 1105). If the requested data element is of type PLD (i.e., Is_PLD is true at block 1105), then method 1100 proceeds to block 1140. If the requested data element is not of type PLD (i.e., Is_PLD is false at block 1105), then method 1100 proceeds to block 1130 (at which point, as discussed above, the processor reads the data element of size S at address A from the cache line) and then proceeds to block 1199 (where method 1100 ends).

At block 1140, which is entered based on a determination at block 1135 that the requested data element is of type PLD, the processor determines whether the state of the cache line is Private-Clean or Private-Dirty. If the state of the cache line is Private-Clean or Private-Dirty, then method 1100 proceeds to block 1130 (at which point, as discussed above, the processor reads the data element of size S at address A from the cache line) and then proceeds to block 1199 (where method 1100 ends). If the state of the cache line is not Private-Clean or Private-Dirty, then method 1100 proceeds to block 1145.

At block 1145, which is entered based on a determination at block 1140 that the state of the cache line is not Private-Clean or Private-Dirty, the processor generates an exception/fault. It is noted that this is an error condition since the existing cache line does not contain PLD, whereas the data element being read is PLD. From block 1145, method 1100 proceeds to block 1199, where method 1100 ends.

At block 1150, which is entered based on a determination at block 1115 that that the requested data element is not of type PLD, the processor sends, on the shared bus, a snooping broadcast requesting the cache line. At block 1155, the processor receives the cache line as the response to the snooping broadcast. At block 1160, the processor sets the state of the cache line based on the snooping protocol and the sender of the cache line. For example, if the protocol is MESI-DC, then the state of the cache line is set to Shared if the sender of the cache line is another processor or the state of the cache line is set to Exclusive. From block 1160, method 1100 proceeds to block 1130 (at which point, as discussed above, the processor reads the data element of size S at address A from the cache line) and then proceeds to block 1199, where method 1100 ends.

At block 1199, as indicated above, the method 1100 ends.

FIG. 12 depicts an example embodiment of a method by which a processor uses a PLD instruction to write a memory operand to a local cache (e.g., L1) of the processor. It will be appreciated that, although primarily presented as being performed serially, at least a portion of the functions of method 1200 may be performed contemporaneously or in a different order than as presented with respect to FIG. 12. At block 1201, method 1200 begins.

At block 1201, method 1200 begins. As indicated at block 1202, the input to method 1200 is a write action for a data element of size S at memory address A and an indication as to whether or not the data element is a PLD or not (i.e., Is_PLD = true/false). If the request is made by a PLD instruction then Is PLD is true, otherwise Is PLD is false.

At block 1205, the processor looks up the address A in the cache for the matching cache line.

At block 1210, the processor determines whether a cache line is found (at block 1205). If, at block 1210, the processor determines that a cache line is not found (i.e., a miss), then method 1200 proceeds to block 1215. If, at block 1210, the processor determines that a cache line is found, then method 1200 proceeds to block 1235.

At block 1215, which is entered based on a determination at block 1210 that a cache line is not found (i.e., a miss), the processor determines whether the data element being written is of type PLD (i.e., whether Is_PLD is true at block 1202). If the data element being written is of type PLD (i.e., Is PLD is true at block 1202), then method 1200 proceeds to block 1220. If the data element being written is not of type PLD (i.e., Is PLD is false at block 1202), then method 1200 proceeds to block 1255.

At block 1220, which is entered based on a determination at block 1215 that the data element being written is of type PLD, the processor loads the missing cache line from the next entity in the memory hierarchy, thereby bypassing any snooping broadcast by the processor on the shared bus to request the cache line. At block 1225, the processor sets the state of the cache line to Private-Dirty. At block 1230, the processor writes the data element of size S to address A in the cache line. From block 1230, method 1200 proceeds to block 1299, where method 1200 ends.

At block 1235, which is entered based on a determination at block 1210 that a cache line is found (i.e., a hit), the processor determines whether the data element being written is of type PLD (i.e., whether Is_PLD is true at block 1202). If the data element being written is of type PLD (i.e., Is_PLD is true at block 1202), then method 1200 proceeds to block 1240. If the data element being written is not of type PLD (i.e., Is_PLD is false at block 1202), then method 1200 proceeds to block 1250.

At block 1240, which is entered based on a determination at block 1235 that the data element being written is of type PLD, the processor determines whether the state of the cache line is Private-Clean or Private-Dirty. If the state of the cache line is Private-Clean or Private-Dirty, then method 1200 proceeds to block 1225 (at which point, as discussed above, the processor writes the data element of size S to address A in the cache line) and then proceeds to block 1299 (where method 1200 ends). If the state of the cache line is not Private-Clean or Private-Dirty, then method 1200 proceeds to block 1245.

At block 1245, which is entered based on a determination at block 1240 that the state of the cache line is not Private-Clean or Private-Dirty, the processor generates an exception/fault. It is noted that this is an error condition since the existing cache line does not contain PLD, whereas the data element being written is PLD. From block 1245, method 1200 proceeds to block 1299, where method 1200 ends.

At block 1250, which is entered based on a determination at block 1235 that the data element being written is not of type PLD, the processor sends, on the shared bus, a snooping broadcast to invalidate the cache line in other caches. From block 1250, the method 1200 proceeds to block 1265.

At block 1255, which is entered based on a determination at block 1215 that the data element being written is not of type PLD, the processor sends, on the shared bus, an RFO snooping broadcast to request and invalidate the cache line. At block 1260, the processor receives the cache line as the response to the snooping broadcast either from another processor or from the memory hierarchy. At block 1265, the processor sets the state of the cache line based on the snooping protocol and the sender of the cache line. For example, if the protocol is MESI-DC, then the state of the cache line is set to Modified. From block 1265, method 1200 proceeds to block 1230 (at which point, as discussed above, the processor writes the data element of size S to address A in the cache line) and then proceeds to block 1299, where method 1200 ends.

At block 1299, as indicated above, the method 1200 ends.

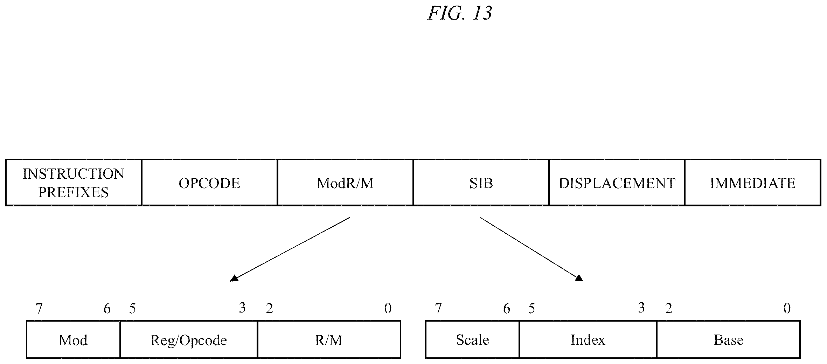

It will be appreciated that embodiments in which a PLD instruction is used to support selective override of cache coherence may be further understood by considering embodiments in which selective override of cache coherence is provided for a processor using a particular type of ISA (namely, an x86 ISA). It will be appreciated that embodiments in which a PLD instruction is used to support selective override of cache coherence in a processor using an x86 ISA may be further understood by first considering the encoding of an x86 instruction in an x86 ISA, as presented with respect to FIG. 13.

FIG. 13 depicts an example encoding of an x86 instruction in an x86 Instruction Set Architecture for illustrating support for overriding of cache coherence.

In the x86 instruction, the Operation Code (Opcode) field is a required single byte field denoting the basic operation of the instruction. This field allows up to 256 primary op code maps. For example, 0x74 is the opcode for a JE instruction for short jumps (i.e., a conditional jump to a location within relative offset of 0x7f in program memory). Alternate opcode maps are defined using escape sequences, which require 2-3 bytes in the opcode field. For example, an escape sequence is a 2-byte opcode encoded as [0f <opcode>] where, here, Of identifies the alternate opcode map. For example, Of 84 is the opcode for a JE instruction for near jumps (i.e., a conditional jump to a location that is too far away for a short jump to reach).

In the x86 instruction, the Mode-Register-Memory (ModR/M) field is a single byte optional field. If the instruction has an operand (i.e., based on the Opcode), then this field specifies the operand(s) and their addressing mode. The bits in this field are divided into following: Mod (bits 6-7), Reg (bits 3-5), and R/M (bits 0-2).

The Mod bits (again, bits 6-7) of the ModR/M field describe the four addressing modes for the memory operand, which are shown below in the context of a MOV instruction. The following MOV instruction transfers data between memory and register EAX:

| Mode | Mod | Intel |
|---|---|---|
| IRegister | 11 | MOV EAX, [ESI] |
| Reg + Off | 01 | MOV EAX, [EBP-8] |
| R*W + Off | 10 | MOV EAX, [EBX*4 + 0100] |
| B + R*W + O | 00 | MOV EAX, [EDX + EBX*4 + 8] |

The Reg bits (again, bits 3-5) of the ModR/M field specify the source or destination register. This allows encoding of the eight general purpose registers in the x86 architecture.

The R/M bits (again, bits 0-2) of the ModR/M field, combined with the Mod field, specify either the second operand in a two operand instruction or the only operand in a single operand instruction (e.g., NOT or NEG). For, example, this field would encode the ESI register as follows (with the register EAX being encoded in the Reg field):

| Mode | Mod | Intel |
|---|---|---|
| Register | 11 | MOV EAX, [ESI] |

In the x86 instruction, the Scale-Index-Base (SIB) field is a single byte optional field. This field is used for scaled indexed addressing mode (specified in Mod) as in the example below:

| Mode | Mod | Intel |
|---|---|---|
| B + R*W + O | 00 | MOV EAX, [EDX + EBX*4 + 8] |

Here, Scale = 4 (the scale factor), Index = EBX (the register containing the index portion), and Base = EDX (the register containing the base portion).

In the x86 instruction, the Displacement field is a variable length field which may have a length of one, two, or four bytes. This field has multiple use cases, examples of which follow. For example, in the example described for SIB, this field contains the non-zero offset value 8. For example, in control instructions, this field contains the address of a control block in program memory in either the absolute value (i.e., added to the base of program memory address) or the relative value (i.e., offset from the address of the control instruction).

In the x86 instruction, the Immediate field is a variable length field which contains a constant operand of an instruction. For example, consider the following instruction that adds 8 to register EAX: MOV EAX, 8. The result of this instruction is that this field contains the value 8.

In the x86 instruction, the Instruction Prefixes field is a variable length optional field that can contain up to four prefixes, where each prefix is 1-byte field. This field changes the default operation of x86 instructions. For example, 66h is "Operand Override" prefix which changes the size of data expected by the default mode of instruction, such as changing from 64-bit to 16-bit. The x86 ISA currently supports following prefixes: Prefix Group 1 (0xF0: LOCK prefix; 0xF2: REPNE/REPNZ prefix; 0xF3: REP or REPE/REPZ prefix), Prefix Group 2 (0x2E: CS segment override; 0x36: SS segment override; 0x3E: DS segment override; 0x26: ES segment override; 0x64: FS segment override; 0x65: GS segment override; 0x2E: Branch not taken; 0x3E: Branch taken), Prefix Group 3 (0x66: Operand-size override prefix), and Prefix Group 4 (0x67: Address-size override prefix). In at least some embodiments, the PLD instruction that is configured to support selective override of cache coherence may be indicated with a prefix in the Instruction Prefixes field. In at least some example embodiments, the prefix that is used to indicate a PLD instruction may be configured as follows: Prefix Group 6 (0x80: Cache Coherence Override Prefix); however, it will be appreciated that the prefix that is used to indicate a PLD instruction may be configured in other ways (e.g., based on inclusion within an existing Prefix Group, using a different Prefix Group, using a different prefix value, or the like, as well as various combinations thereof).

In at least some example embodiments, when an existing x86 instruction is encoded as a PLD instruction, the mnemonic of the instruction may be prepended within a value (e.g., N or other suitable value) to indicate that the x86 instruction is a PLD instruction. For example, consider the following MOV instruction in x86 which reads the value at the memory address indicated by ESI register to register EAX: MOV EAX, [ESI]. When this MOV instruction is encoded as PLD instruction, then it may be denoted with mnemonic NMOV, as follows: NMOV EAX, [ESI]. It will be appreciated, as indicated above, that PLD instructions may be indicated in various other ways (e.g., using other mnemonics or using other mechanisms for indicating PLD instructions).

It will be appreciated that, although primarily presented herein with respect to embodiments in which a PLD instruction is used to support selective override of cache coherence in a processor using a particular type of ISA (namely, an x86 ISA), a PLD instruction may be used to support selective override of cache coherence for processors using various other types of ISAs (e.g., ARM, MIPS, or the like).

It will be appreciated that various example embodiments for supporting selective override of cache coherence based on use of processor instructions of the processor to identify PLD to be exempted from cache coherence may be further understood by considering use of such embodiments in an NFV application. For example, in an NFV application, a subroutine (e.g., ING) may use programming language specific directives to indicate that function call stack and PBUF it accesses belong to PLD memory regions.. Then, the resultant machine instructions (translated/compiled from the programming language) that access the function call stack or PBUF are generated as PLD instructions.

```
        ING (PBUF packet buffer)
        {
            int index, top, bottom;
            mark_stack_PLD(true);
            mark_PLD(packet_buffer, true);
           top = packet_buffer->top;
           bottom = packet_buffer->bottom;
           // Slide by the size of ethernet header.
           index = top + 12;
        }
```

In the sample above, implementation of the ING function (that processes an incoming packet), index, top, and bottom are local variables which are allocated in the stack frame. The PBUF input is the packet_buffer. ING uses two special directives to the compiler/translator to declare the PLDs accessed by it, as follows: (1) mark_stack_PLD(true), which means all local variables in the stack, such as index, top, bottom, are PLD and (2) mark PLD (packet buffer, true), which means the packet buffer is PLD. Hereby, the program also needs to ensure that the size of packet_buffer is cache line aligned, otherwise there could be hardware faults/exceptions. Then, any machine instruction that accesses packet_buffer or the local variables will be generated by the compiler/translator as a PLD instruction. For example, the following two operations read the packet_buffer and store into local variables in the stack: (1) top = packet_buffer->top and (2) bottom = packet_buffer->bottom. So, the resultant machine instructions that read the packet buffer are generated as PLD instructions (e.g., NMOV in x86). Similarly, the resultant machine instructions that store into local variables are generated as PLD instructions (e.g., NMOV in x86).

For example, the resultant machine instructions in x86 for 'top = packet_buffer->top' can be as follows:
NMOV address@packet_buffer->top, eax
NMOV eax, address@top
It is noted that, in these examples, the machine instruction is shown in the format of the assembly language on x86.

Similarly, for example, the resultant machine instructions in x86 for 'bottom = packet_buffer->bottom' can be as follows:
NMOV address@packet_buffer->botton, edx
NMOV edx, address@top

In the following instruction, an add operation is performed on the local variable top and the result is stored into the local variable index: index = top + 12. So, the add operation on top is performed using a PLD instruction such as NADD in x86 as below:
NADD, address@top, 12, eax
The NADD instruction reads the value at the address of top, adds numeric value 12, and the resultant value is stored into register 'eax'. Then the value in register eax is stored into index by the following PLD instruction:
NMOV, eax, address@index

It will be appreciated that various example embodiments for supporting selective override of cache coherence based on use of processor instructions of the processor to identify PLD to be exempted from cache coherence may be utilized by processors providing various other types of applications.

Various example embodiments for supporting selective override of cache coherence may be configured to support selective override of cache coherence based on use of processor instructions of the processor to identify PLD to be exempted from cache coherence in various other ways.

Various example embodiments for supporting selective override of cache coherence may be configured to support selective override of cache coherence, based on programmability of the processor to support selective overriding of cache coherence for a data element operated on by the processor based on a determination by the processor that the data element is to be exempted from cache coherence, in various other ways.

Various example embodiments for supporting selective override of cache coherence may be configured to support selective override of cache coherence based on programmable control of the processor where the programmable control of the processor may be provided in various other ways.

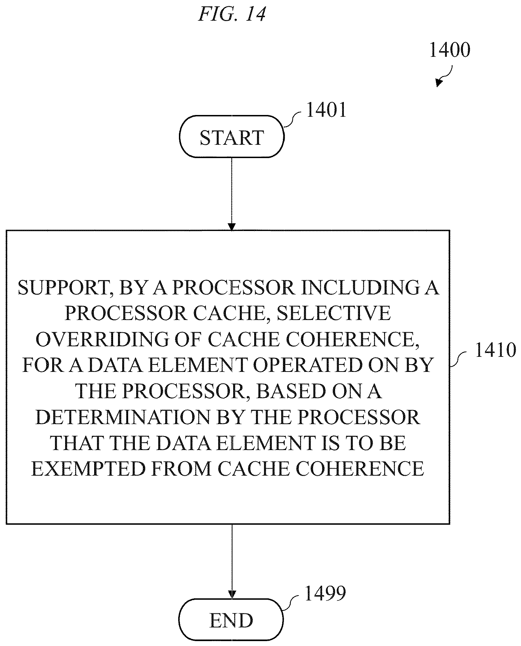

FIG. 14 depicts an example embodiment of a method for supporting selective override of cache coherence. It will be appreciated that, although primarily presented as being performed serially, at least a portion of the functions of method 1400 may be performed contemporaneously or in a different order than as presented with respect to FIG. 14. At block 1401, method 1400 begins. At block 1410, support, by a processor including a processor cache, selective overriding of cache coherence, for a data element operated on by the processor, based on a determination by the processor that the data element is to be exempted from cache coherence. At block 1499, method 1400 ends. It will be appreciated that various message processing functions presented herein with respect to FIGs. 1 - 13 may be incorporated within the context of method 1400 of FIG. 14.

Various example embodiments for supporting selective override of cache coherence may provide various advantages or potential advantages. For example, various example embodiments for supporting selective override of cache coherence may obviate the need for the L3 cache or other shared cache to maintain "core valid bits" or other suitable indicators per cache line (the use of which may have various disadvantages, such as only being possible if the L3 cache is inclusive, possibly resulting in bombardment of PLD originated Trans-3 traffic from all processors on the L3 cache in order to get filtered, and so forth) to contain PLD originated Trans-3 traffic in a multiprocessor computer system. For example, various example embodiments for supporting selective override of cache coherence may obviate the need for use of snoop filters (the use of which may have various disadvantages, such as increasing the size of the chip, consuming considerable power and adding considerable latency, being prone to conflict misses between entries that leads to eviction and leak of Trans-3 traffic, added cost and complexity, and so forth) to contain PLD originated Trans-3 traffic in a multiprocessor computer system. For example, various example embodiments for supporting selective override of cache coherence, when applied within an NFV context, may address various challenges to building a high-performance forwarding engine in a general-purpose processor in order to support improved or even optimum forwarding performance by NFV routers while reducing capital and operational expenses (and, thus, reducing its per-bit cost). Various example embodiments for supporting selective override of cache coherence may provide various other advantages or potential advantages.

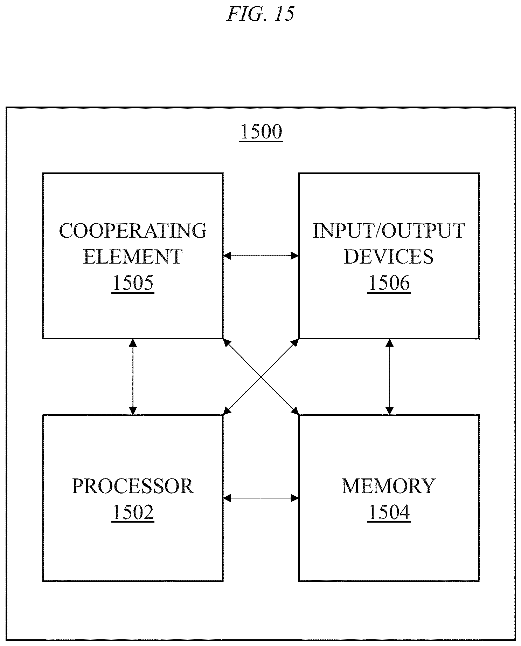

FIG. 15 depicts an example embodiment of a computer suitable for use in performing various functions presented herein.

The computer 1500 includes a processor 1502 (e.g., a central processing unit, a processor, a processor having a set of processor cores, a processor core of a processor, or the like) and a memory 1504 (e.g., a random access memory, a read only memory, or the like). The processor 1502 and the memory 1504 may be communicatively connected. In at least some embodiments, the computer 1500 may include at least one processor and at least one memory including computer program code, wherein the at least one memory and the computer program code are configured to, with the at least one processor, cause the computer to perform various functions presented herein.

The computer 1500 also may include a cooperating element 1505. The cooperating element 1505 may be a hardware device. The cooperating element 1505 may be a process that can be loaded into the memory 1504 and executed by the processor 1502 to implement various functions presented herein (in which case, for example, the cooperating element 1505 (including associated data structures) can be stored on a non-transitory computer-readable storage medium, such as a storage device or other suitable type of storage element (e.g., a magnetic drive, an optical drive, or the like)).

The computer 1500 also may include one or more input/output devices 1506. The input/output devices 1506 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1500 may represent a general architecture and functionality suitable for implementing functional elements described herein, portions of functional elements described herein, or the like, as well as various combinations thereof. For example, computer 1500 may provide a general architecture and functionality that is suitable for implementing one or more elements presented herein, such as multiprocessor computer system 100, a portion of multiprocessor computer system 100, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
a processor including a processor cache, wherein the processor is configured to support selective overriding of cache coherence, for a data element operated on by the processor, based on a determination by the processor that the data element is to be exempted from cache coherence.

2. The apparatus according to claim 1, wherein the processor is configured such that, based on the determination by the processor that the data element is to be exempted from cache coherence, the processor will not trigger a cache coherence transaction on the data element in response to a memory operation on the data element.

3. The apparatus according to any of claims 1 to 2, wherein the processor is configured such that, based on the determination by the processor that the data element is to be exempted from cache coherence, the processor will not trigger a cache coherence transaction on the data element.

4. The apparatus according to any of claims 1 to 3, wherein the determination by the processor that the data element is to be exempted from cache coherence is based on a data type of the data element.

5. The apparatus according to claim 4, wherein the data type of the data element is processor local data (PLD).

6. The apparatus according to any of claims 4 to 5, wherein the data type of the data element is set by a program configured to be executed by the processor.

7. The apparatus of claim according to any of claims 1 to 6, wherein the determination by the processor that the data element is to be exempted from cache coherence is based on memory region configuration information indicative that a memory region with which a memory operation for the data element is associated is configured to store a type of data to be exempted from cache coherence.

8. The apparatus according to claim 7, wherein the memory region configuration information is maintained in a control register of the processor.

9. The apparatus according to claim 8, wherein the control register is a range register configured to provide control over a manner in which a memory range of the processor cache is cached in the processor cache.

10. The apparatus according to claim 9, wherein the range register is a Memory Type Range Register (MTRR) or an Address Range Register (ARR).

11. The apparatus according to any of claims 9 to 10, wherein the range register is configured to support an access mode in which data in a specific memory range is made exempt from cache coherence.

12. The apparatus according to claim 8, wherein the control register is a page attribute table configured to provide control over a manner in which a page of the processor cache is cached in the processor cache.

13. The apparatus according to claim 12, wherein the page attribute table is configured to support an access mode in which data in a specific page is made exempt from cache coherence.

14. The apparatus according to any of claims 1 to 13, wherein the determination by the processor that the data element is to be exempted from cache coherence is based on a processor instruction indicative of a memory operation for the data element.

15. The apparatus according to any of claims 1 to 14, wherein the determination by the processor that the data element is to be exempted from cache coherence is based on a determination that a processor instruction including a memory operation for the data element is indicative that the memory operation is for a type of data to be exempted from cache coherence.
